# EUROPEAN PATENT APPLICATION

(11) **EP 2 464 190 A1**
(43) Date of publication of application: **13.06.2012**
(21) Application number: 10806376.9
(22) Date of filing: 29.07.2010
(51) Int. Cl.: H04W 74/08, H04J 11/00, H04W 72/04

(54) **MOBILE STATION DEVICE, RADIO COMMUNICATION METHOD, AND CONTROL PROGRAM FOR MOBILE STATION DEVICE**

(30) Priority: 06.08.2009 JP 2009183036
(71) Applicant: Sharp Kabushiki Kaisha, Osaka-shi, Osaka 545-8522 (JP)
(72) Inventor: SUZUKI, Shoichi, Osaka 545-8522 (JP); NAKASHIMA, Daiichiro, Osaka 545-8522 (JP); YAMADA, Shohei, Osaka 545-8522 (JP); KATO, Yasuyuki, Osaka 545-8522 (JP); UEMURA, Katsunari, Osaka 545-8522 (JP)
(74) Representative: Müller - Hoffmann & Partner
(86) International application number: PCT/JP2010/062745
(87) International publication number: WO 2011/016377

(57) **Abstract**

A plurality of uplink component carriers and downlink component carriers are allocated from a base station apparatus, a common search space of a specific downlink component carrier of the allocated downlink component carriers is monitored, and random access processing is started in any one of the uplink component carriers. A mobile station apparatus is applied to a communication system in which the base station apparatus allocates to any mobile station apparatus the plurality of downlink component carriers including the common search space to be monitored in common together with any other mobile station apparatus, and in performing random access to said base station apparatus, the mobile station apparatus extends a monitored object of a physical downlink control channel of the common search space from a first common search space of the downlink component carrier instructed to be monitored from the base station apparatus to a second common search space of any downlink component carrier other than the downlink component carrier including the first common search space.

## Description

### Technical Field

The present invention relates to a mobile station apparatus, a radio communication method, and a control program for the mobile station apparatus in which the mobile station apparatus to which a plurality of uplink carrier components and downlink carrier components have been allocated from a base station apparatus can start random access processing in any one of the allocated uplink carrier components.

### Background Art

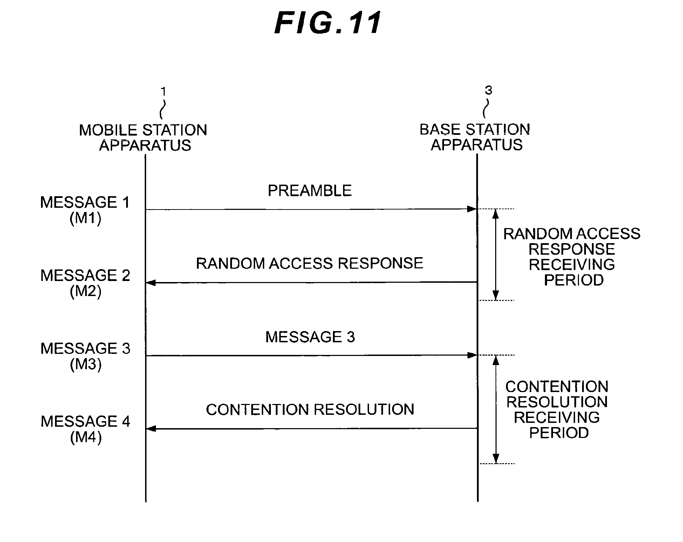

Fig. 11 is a sequence chart showing one example of random access of a radio communication system according to a conventional technology. Fig. 11 shows a procedure example of Contention based Random Access. First, a mobile station apparatus decides a range of signatures to be selected according to a downlink channel quality, etc., randomly selects a signature from the selected range of the signatures, and transmits a preamble in a physical random access channel (a message 1 (M1) in step S201).

A base station apparatus, when having received the preamble transmitted from the mobile station apparatus, calculates a synchronization timing shift between the mobile station apparatus and the base station apparatus from the preamble, and performs scheduling (uplink radio resource allocation, specification of a transmission format (message size), etc.) for the mobile station apparatus to transmit a message 3. Subsequently, the base station apparatus allocates a Cell-Radio Network Temporary Identifier Temporary (C-RNTI) to the mobile station apparatus, arranges a Random Access-Radio Network Temporary Identifier (RA-RNTI) corresponding to the physical random access channel in which the preamble has been received in a Physical Downlink Control Channel (PDCCH) of a Common Search Space, arranges a random access response including an amount of a synchronization timing shift, scheduling information, the Temporary C-RNTI, and a signature number of the received preamble (also referred to as a random ID or a preamble ID) in a Physical Downlink Shared Channel (PDSCH) indicated by radio resource allocation included in the physical downlink control channel, and transmits the random access response to the mobile station apparatus (a message 2 (M2) in step S202).

The mobile station apparatus, when confirming that the RA-RNTI is included in the physical downlink control channel in the common search space, confirms a content of the random access response arranged in the physical downlink shared channel indicated by the radio resource allocation included in the physical downlink control channel. Subsequently, the mobile station apparatus extracts a response including the signature number of the preamble transmitted by its own apparatus, corrects the synchronization timing shift, and transmits the message 3 including information, such as the C-RNTI previously notified from the base station apparatus, an RRC Connection Request message, or an RRC Connection Reestablishment Request message, using a radio resource and a transmission format of an allocated Physical Uplink Shared Channel (PUSCH) (message 3 (M3) in step S203).

The base station apparatus, when having received the message 3 from the mobile station apparatus, transmits to the mobile station apparatus a contention resolution indicating that the mobile station apparatus has succeeded in random access, i.e., collision of the preambles has not occurred between the mobile station apparatuses, or collision has been resolved when collision of the preambles has occurred between the mobile station apparatuses (a message 4 (M4) in step S204).

The mobile station apparatus, when having succeeded in receiving the contention resolution, determines to have succeeded in the random access, and completes processing regarding the random access. Note that the mobile station apparatus, when not having detected the signature number of the transmitted preamble within a random access response receiving period, or when not having detected the contention resolution within a contention resolution receiving period, starts over from transmission of the preamble (refer to Non-Patent Document 1. Section 5.1).

In LTE-A (Long Term Evolution-Advanced), it has been required that the LTE-A have backward compatibility with LTE (Long Term Evolution), i.e., a base station apparatus of the LTE-A simultaneously performs radio communication with mobile station apparatuses of both the LTE-A and the LTE, and that the mobile station apparatus of the LTE-A can perform radio communication with the base station apparatuses of both the LTE-A and the LTE, and it has been examined that the LTE-A uses the same channel structure as in the LTE. For example, in the LTE-A, there has been proposed a technology (frequency band aggregation: also referred to as Spectrum aggregation, Carrier aggregation, Frequency aggregation, etc.) in which a plurality of frequency bands (hereinafter referred to as Carrier Components (CC) or Component Carriers (CC)) having the same channel structure as in the LTE is used as one frequency band (wide frequency band).

Specifically, in communication using frequency band aggregation, for each downlink carrier component, transmitted are: a Synchronization Channel (SCH); a Physical Broadcast Channel (PBCH); a Physical Downlink Control Channel (PDCCH); a Physical Downlink Shared Channel (PDSCH); a Physical Multicast Channel (PMCH); a Physical Control Format Indicator Channel (PCFICH); and a Physical Hybrid Automatic Repeat Request Indicator Channel (PHICH), and for each uplink carrier component, allocated are: a Physical Uplink Shared Channel (PUSCH); a Physical Uplink Control Channel (PUCCH); and a Physical Random Access Channel (PRACH). Namely, frequency band aggregation is a technology in which a base station apparatus and a plurality of mobile station apparatuses simultaneously transmit and receive a plurality of pieces of data information and a plurality of pieces of control information on an uplink and a downlink using the physical uplink control channels, the physical uplink shared channels, the Physical Downlink Control Channels, the physical downlink shared channels, etc. of a plurality of carrier components (refer to Non-Patent Document 2, chapter 5).

In communication using the above-described frequency band aggregation, in Non-Patent Document 3, described is a technology in which a mobile station apparatus monitors (performs monitoring) a Common Search Space in any one of a plurality of downlink carrier components allocated to a base station apparatus. This technology is the technology intended to suppress an increasing load by the mobile station apparatus simultaneously monitoring Physical Downlink Control Channels of a plurality of downlink carrier components.

### Citation List

### Non-Patent Document

Non-Patent Document 1: "3GPP TS36.321 v8.5.0 (2009-03)", March 17, 2009.
Non-Patent Document 2: "3GPP TR36.814 v1.0.2 (2009-03)", May, 2009.
Non-Patent Document 3: "PDCCH Design for Carrier Aggregation and Post Rel-8features", 3GPP TSG RAN WG1 Meeting #57bis, R1-092641, Jun 29- July 3, 2009.

### Disclosure of the Invention

### Problems to be Solved by the Invention

However, since a base station apparatus and a mobile station apparatus perform random access communication in a set of uplink carrier component and downlink carrier component in a conventional technology, the mobile station apparatus does not monitor a common search space of all the downlink carrier components even though the base station apparatus allocates a plurality of uplink carrier components and downlink carrier components to the mobile station apparatus, so that the mobile station apparatus can receive a random access response only in the downlink carrier component that monitors the common search space, and thus the mobile station apparatus can start random access processing only in the uplink carrier component corresponding to the downlink carrier component that monitors the common search space. As a result of this, there has been a problem that when the base station apparatus allocates to a large number of mobile station apparatuses the same downlink carrier component as the downlink carrier component that monitors the common search space, the large number of mobile station apparatuses perform random access in the same uplink carrier component, and thereby a plurality of mobile station apparatuses selects the same preamble, which increases a possibility of causing collision of the preambles.

The present invention is made in view of the above-described problems, and has an object to provide a mobile station apparatus, a radio communication method, and a control program for the mobile station apparatus in which a plurality of uplink carrier components and downlink carrier components are allocated from a base station apparatus, a common search space of a specific downlink carrier component of the allocated downlink carrier components is monitored, and random access processing can be started in any one of the uplink carrier components.

### Means for Solving the Problems

(1) In order to achieve the above-described object, the present invention has taken the following measures. Namely, a mobile station apparatus of the present invention is the mobile station apparatus which performs radio communication with a base station apparatus using a plurality of component carriers, wherein in performing random access to the base station apparatus, a monitored object of a physical downlink control channel in a common search space to be monitored together with any other mobile station apparatus is extended from a first common search space of a downlink component carrier instructed to be monitored from the base station apparatus to a second common search space of any downlink component carrier in which random access processing is performed other than the downlink component carrier in which the first common search space is configured.

As described above, since the monitored object of the physical downlink control channel in the common search space is extended from the first common search space of the downlink component carrier instructed to be monitored from the base station apparatus to the second common search space of any downlink component carrier in which the random access processing is performed other than the downlink component carrier in which the first common search space is configured, the mobile station apparatus can start random access processing in all uplink component carriers set by the base station apparatus, and the uplink component carriers in which the mobile station apparatus starts the random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink component carrier.

(2) In addition, a mobile station apparatus of the present invention is the mobile station apparatus which performs radio communication with a base station apparatus using a plurality of component carriers and includes: a radio resource control unit that controls to monitor a physical downlink control channel in a first common search space configured in each of one or more specific first downlink component carriers; and a random access processing unit that, when random access processing was started using a random access resource corresponding to a second downlink component carrier other than the first downlink component carrier, controls to monitor a physical downlink control channel regarding random access in a second common search space configured in the second downlink component carrier in which the random access processing has been started using the corresponding random access resource.

As described above, since the mobile station apparatus monitors the physical downlink control channel regarding random access in the second common search space configured in the second downlink component carrier when random access processing is started in the random access resource corresponding to the second downlink component carrier other than the first downlink component carrier that monitors the physical downlink control channel by monitoring the first common search space, the mobile station apparatus can start random access processing in all uplink component carriers set by the base station apparatus.

(3) In addition, a mobile station apparatus of the present invention is characterized by controlling to start random access processing in a random access resource notified from the base station apparatus.

As a result of this, the base station apparatus can select an uplink component carrier to be instructed to start random access processing from all the uplink component carriers allocated to the mobile station apparatus.

(4) In addition, a mobile station apparatus of the present invention is characterized by controlling to monitor at least a physical downlink control channel broadcasted by the base station apparatus in the first common search space.

As described above, the physical downlink control channel broadcasted by the base station apparatus is monitored only in the first common search space configured in each of the specific downlink component carriers, and whereby a load due to monitoring the physical downlink control channel in the mobile station apparatus can be suppressed.

(5) In addition, a mobile station apparatus of the present invention is characterized by monitoring a physical downlink control channel addressed to its own apparatus in the second common search space of the downlink component carrier to which the random access resource in which the random access processing has been started corresponds, during a predetermined period after transmitting a message 3 in the same uplink component carrier as the random access resource in which the random access processing has been started, and considering to have succeeded in the random access when detecting the physical downlink control channel addressed to its own apparatus.

As described above, since the mobile station apparatus monitors the physical downlink control channel addressed to its own apparatus in the second common search space of the downlink component carrier to which the random access resource corresponds in which the random access processing has been started during the predetermined period after transmitting the message 3, a degree of freedom in arrangement of physical downlink control channel can be increased in the base station apparatus.

(6) In addition, a radio communication method of the present invention is the radio communication method which is used for a mobile station apparatus that performs radio communication with a base station apparatus using a plurality of component carriers, wherein in performing random access to the base station apparatus, a monitored object of a physical downlink control channel in a common search space to be monitored together with any other mobile station apparatus is extended from a first common search space of a downlink component carrier instructed to be monitored from the base station apparatus to a second common search space of any downlink component carrier in which random access processing is performed other than the downlink component carrier in which the first common search space is configured.

As described above, since the monitored object of the physical downlink control channel in the common search space is extended from the first common search space of the downlink component carrier instructed to be monitored from the base station apparatus to the second common search space of any downlink component carrier in which random access processing is performed other than the downlink component carrier in which the first common search space is configured, the mobile station apparatus can start random access processing in all uplink component carriers set by the base station apparatus, and uplink component carriers in which the mobile station apparatus starts random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink component carrier.

(7) In addition, a radio communication method of the present invention is the radio communication method which is used for a mobile station apparatus that performs radio communication with a base station apparatus using a plurality of component carriers, the method comprising at least the steps of: monitoring a physical downlink control channel in a first common search space configured in each of one or more specific first downlink component carriers; starting random access processing using a random access resource corresponding to a second downlink component carrier other than the first downlink component carrier; and monitoring a physical downlink control channel regarding random access in a second common search space configured in a second downlink component carrier in which random access processing has been started using the corresponding random access resource.

As described above, since the physical downlink control channel regarding random access is monitored in the second common search space configured in the second downlink component carrier when random access processing is started in the random access resource corresponding to the second downlink component carrier other than the first downlink component carrier in which the physical downlink control channel is monitored by monitoring the first common search space, the mobile station apparatus can start random access processing in the all uplink component carriers set by the base station apparatus.

(8) In addition, a control program of the present invention is the control program which is used for a mobile station apparatus that performs radio communication with a base station apparatus using a plurality of component carriers, wherein in performing random access to the base station apparatus, the control program converts a series of processing into commands so as to enable a computer to read and execute them, the series of processing including processing of extending a monitored object of a physical downlink control channel in a common search space to be monitored together with any other mobile station apparatus from a first common search space of a downlink component carrier instructed to be monitored from the base station apparatus to a second common search space of any downlink component carrier in which random access processing is performed other than the downlink component carrier in which the first common search space is configured.

As described above, since the monitored object of the physical downlink control channel in the common search space is extended from the first common search space of the downlink component carrier instructed to be monitored from the base station apparatus to the second common search space of any downlink component carrier in which random access processing is performed other than the downlink component carrier in which the first common search space is configured, the mobile station apparatus can start random access processing in the all uplink component carriers set by the base station apparatus, and uplink component carriers in which the mobile station apparatus starts random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink component carrier.

(9) In addition, a control program of the present invention is the control program which is used for a mobile station apparatus that performs radio communication with a base station apparatus using a plurality of component carriers, wherein the control program converts a series of processing into commands so as to enable a computer to read and execute them, the series of processing including processing of: monitoring a physical downlink control channel using a first common search space configured in each of one or more specific first downlink component carriers; starting random access processing using a random access resource corresponding to a second downlink component carrier other than the first downlink component carrier; and monitoring a physical downlink control channel regarding random access in a second common search space configured in the second downlink component carrier in which random access processing has been started using the corresponding random access resource.

As described above, since the physical downlink control channel regarding random access is monitored in the second common search space configured in the second downlink component carrier when random access processing is started in the random access resource corresponding to the second downlink component carrier other than the first downlink component carrier in which the physical downlink control channel is monitored by monitoring the first common search space, the mobile station apparatus can start random access processing in the all uplink component carriers set by the base station apparatus.

### Advantage of the Invention

According to the present invention, a mobile station apparatus is allocated with a plurality of uplink carrier components and downlink carrier components from a base station apparatus, and can start random access processing in any one of the uplink carrier components allocated by the base station apparatus even though the mobile station apparatus monitors a common search space of a specific downlink carrier component of the allocated downlink carrier components.

### Brief Description of the Drawings

Fig. 1 is a conceptual illustration of a radio communication system according to an embodiment of the present invention;
Fig. 2 is an illustration showing one example of frequency band aggregation processing according to the embodiment of the present invention;
Fig. 3 is a schematic illustration showing one example of a configuration of a downlink radio frame according to the embodiment of the present invention;
Fig. 4 is a schematic illustration showing one example of a configuration of an uplink radio frame according to the embodiment of the present invention;
Fig. 5 is a schematic illustration showing one example of a configuration of signatures according to the embodiment of the present invention;
Fig. 6 is a schematic block diagram showing a configuration of a base station apparatus 3 according to the embodiment of the present invention;
Fig. 7 is a schematic block diagram showing a configuration of a mobile station apparatus 1 according to the embodiment of the present invention;
Fig. 8A shows one example of an operation that switches monitoring of a common search space (second common search space) in a non-common search space carrier component when the mobile station apparatus 1 according to the embodiment of the present invention performs Contention based Random Access as a random access method;
Fig. 8B shows one example of an operation that switches monitoring of a common search space (first common search space) in a common search space carrier component when the mobile station apparatus 1 according to the embodiment of the present invention performs Contention based Random Access as the random access method;
Fig. 9A is a flow chart showing one example of an operation of the mobile station apparatus 1 according to the embodiment of the present invention;
Fig. 9B is a flow chart showing one example of an operation of the mobile station apparatus 1 according to the embodiment of the present invention;
Fig. 10 is a conceptual illustration showing a configuration of a common search space according to the embodiment of the present invention; and
Fig. 11 is a sequence chart showing one example of random access of a radio communication system according to a conventional technology.

### Best Modes for Carrying Out the Invention

In 3GPP (3rd Generation Partnership Project), has been examined a radio access system and a radio network that achieves higher-speed data communication (hereinafter referred to as "Long Term Evolution-Advanced (LTE-A)" or "Advanced Evolved Universal Terrestrial Radio Access (A-EUTRA)") utilizing evolution of a radio access system and a radio network of cellular mobile communication (hereinafter referred to as "Long Term Evolution (LTE)" or "Evolved Universal Terrestrial Radio Access (EUTRA)") and a frequency band wider than the LTE.

In the LTE, an OFDM (Orthogonal Frequency Division Multiplexing) system, which is multicarrier transmission, is used as a communication system for radio communication from a base station apparatus to a mobile station apparatus (downlink). In addition, SC-FDMA (Single Carrier-Frequency Division Multiple Access) system, which is single career transmission, is used as a communication system for radio communication from the mobile station apparatus to the base station apparatus (uplink).

In addition, in the LTE, on the downlink, allocated are a Synchronization Channel (SCH), a Physical Broadcast Channel (PBCH); a Physical Downlink Control Channel (PDCCH), a Physical Downlink Shared Channel (PDSCH), a Physical Multicast Channel (PMCH), a Physical Control Format Indicator Channel (PCFICH), and a Physical Hybrid Automatic Repeat Request Indicator Channel (PHICH). In addition, on the uplink, allocated are a Physical Uplink Shared Channel (PUSCH), a Physical Uplink Control Channel (PUCCH), and a Physical Random Access Channel (PRACH).

An intended use of the physical random access channel is to establish synchronization between the mobile station apparatus and the base station apparatus on the uplink. The mobile station apparatus starts random access when the mobile station apparatus and the base station apparatus are out of synchronization and further, the mobile station apparatus has data information to be transmitted to the base station apparatus using the PUSCH, or when the base station apparatus notifies the mobile station apparatus using the physical downlink control channel to start random access, etc.

In random access, included are two access methods, i.e., Contention based Random Access and Non-contention based Random Access. The Contention based Random Access is the access method with which collision may occur between the mobile station apparatuses, and is usually performed random access. The Non-contention based Random Access is the access method with which collision does not occur between the mobile station apparatuses, and is random access performed under the base station apparatus initiative in a special case of handover etc. in order to quickly establish synchronization between the mobile station apparatus and the base station apparatus.

In the random access, the mobile station apparatus transmits only a preamble in order to establish synchronization with the base station. The preamble includes signatures, which are signal patterns representing information, and tens of types of signatures can be prepared to represent several bits of information. Currently, it is assumed that the mobile station apparatus transmits 6-bit information using the preamble, and that 64 types of signatures are prepared. Hereinafter, an embodiment of the present invention will be described with reference to drawings.

### <Regarding radio communication system>

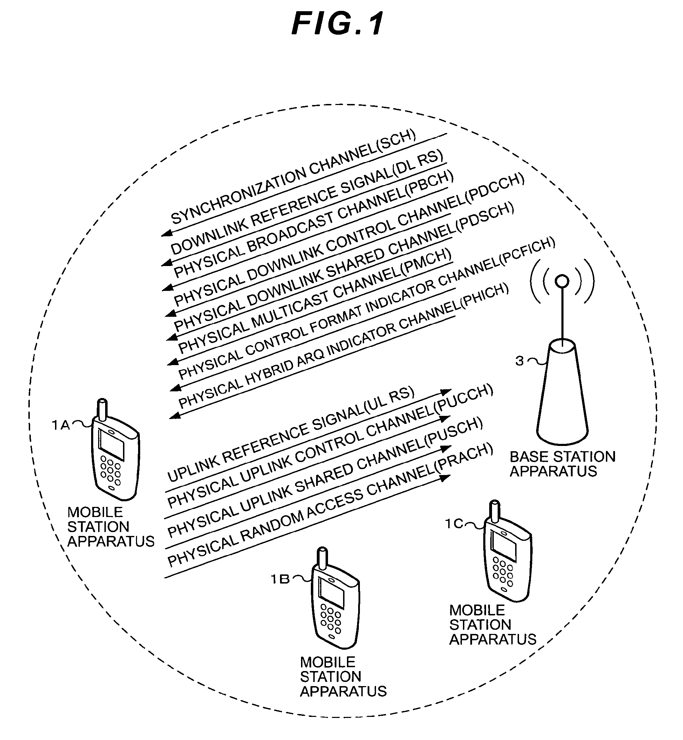

Fig. 1 is a conceptual illustration of a radio communication system according to an embodiment of the present invention. In Fig. 1, the radio communication system comprises mobile station apparatuses 1A to 1C and a base station apparatus 3. The mobile station apparatuses 1A to 1C and the base station apparatus 3 perform communication using frequency band aggregation, which will be described hereinafter. Fig. 1 shows that in radio communication from the base station apparatus 3 to the mobile station apparatuses 1A to 1C (downlink), allocated are a Synchronization Channel (SCH), a downlink pilot channel (alternatively, also referred to as a "Downlink Reference Signal (DL RS)"), a Physical Broadcast Channel (PBCH), a Physical Downlink Control Channel (PDCCH), a Physical Downlink Shared Channel (PDSCH), a Physical Multicast Channel (PMCH), a Physical Control Format Indicator Channel (PCFICH), and a Physical Hybrid ARQ Indicator Channel (PHICH).

In addition, Fig. 1 shows that in radio communication from the mobile station apparatuses 1A to 1C to the base station apparatus 3 (uplink), allocated are an uplink pilot channel (alternatively, also referred to as an "Uplink Reference Signal (UL RS)"), a Physical Uplink Control Channel (PUCCH), a Physical Uplink Shared Channel (PUSCH), a Physical Random Access Channel (PRACH). In the uplink reference signal, included are a Demodulation Reference Signal transmitted by time-multiplexing with the physical uplink shared channel or the physical uplink control channel and used for channel compensation of the physical uplink shared channel and the physical uplink control channel, and a Sounding Reference Signal used for estimating a channel condition in the uplink. Hereinafter, the mobile station apparatuses 1A to 1C are referred to as a mobile station apparatus 1.

### <Regarding frequency band aggregation>

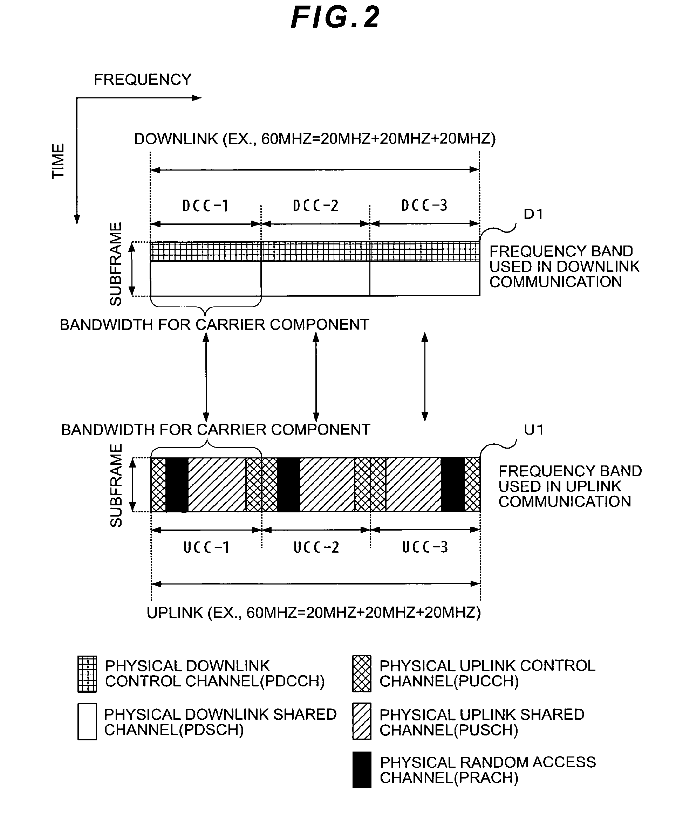

Fig. 2 is an illustration showing one example of frequency band aggregation processing according to the embodiment of the present invention. In Fig. 2, a horizontal axis indicates a frequency domain and a vertical axis indicates a time domain. As shown in Fig. 2, a downlink subframe D1 is comprised of a subframe of three downlink carrier components (a DCC-1 (Downlink Component Carrier-1), a DCC-2, and a DCC-3) each having a bandwidth of 20 MHz. A physical downlink control channel indicated as a region hatched with lattice-shaped lines, and a physical downlink shared channel indicated as a region without hatching are time-multiplexed to be allocated to each of the subframes of the downlink carrier components.

Meanwhile, an uplink subframe U1 is comprised of three uplink carrier components (a UCC-1 (Uplink Component Carrier-1), a UCC-2, and a UCC-3) each having a bandwidth of 20 MHz. An physical uplink control channel indicated as a region hatched with lattice-shaped oblique lines, a physical uplink shared channel indicated as a region hatched with rising oblique lines from bottom left to top right, and a physical random access channel indicated as a region hatched with black color are frequency-multiplexed to be allocated to each of the subframes of the uplink carrier components.

For example, the base station apparatus 3 arranges a signal in the physical downlink shared channel of one or more downlink carrier components of the three downlink carrier components in a certain downlink subframe, and transmits the signal to the mobile station apparatus 1. In addition, the mobile station apparatus 1 arranges a signal in the physical uplink shared channel of one or more uplink carrier components of the three uplink carrier components in a certain uplink subframe, and transmits the signal to the base station apparatus 3. In addition, the mobile station apparatus 1 selects a physical random access channel of one arbitrary uplink carrier component of the three uplink carrier components in a certain uplink subframe, arranges a preamble in the selected physical random access channel, and transmits it to the base station apparatus 3.

Paired are the uplink carrier component and the downlink carrier component in which the mobile station apparatus 1 and the base station apparatus 3 transmit and receive a message 1 to a message 4 of random access, and the base station apparatus 3 broadcasts in each downlink carrier component information regarding random access transmission, such as information indicating the uplink carrier component paired with the downlink carrier component, and information indicating a configuration of the physical random access channel in the uplink carrier component paired with the downlink carrier component and a transmission condition of random access, and notifies the mobile station apparatus 1 of the information.

For example, in Fig. 2, when the DCC-1 and the UCC-1, the DCC-2 and the UCC-2, and the DCC-3 and the UCC-3 are paired in a case where the message 1 to the message 4 of the random access are transmitted and received, the base station apparatus 3 broadcasts information indicating the uplink carrier components (UCC-1, UCC-2, and UCC-3) paired with the downlink carrier components and information regarding random access transmission in the uplink carrier component paired with the downlink carrier component in each of the downlink carrier components (DCC-1, DCC-2, and DCC-3). When the mobile station apparatus 1 transmits the message 1 (preamble) in the UCC-1, the base station apparatus 3 and the mobile station apparatus 1 transmit and receive the message 2 (random access response) in the DCC-1, transmit and receive the message 3 in the UCC-1, and transmit and receive the message 4 in the DCC-1.

### <Regarding downlink radio frame>

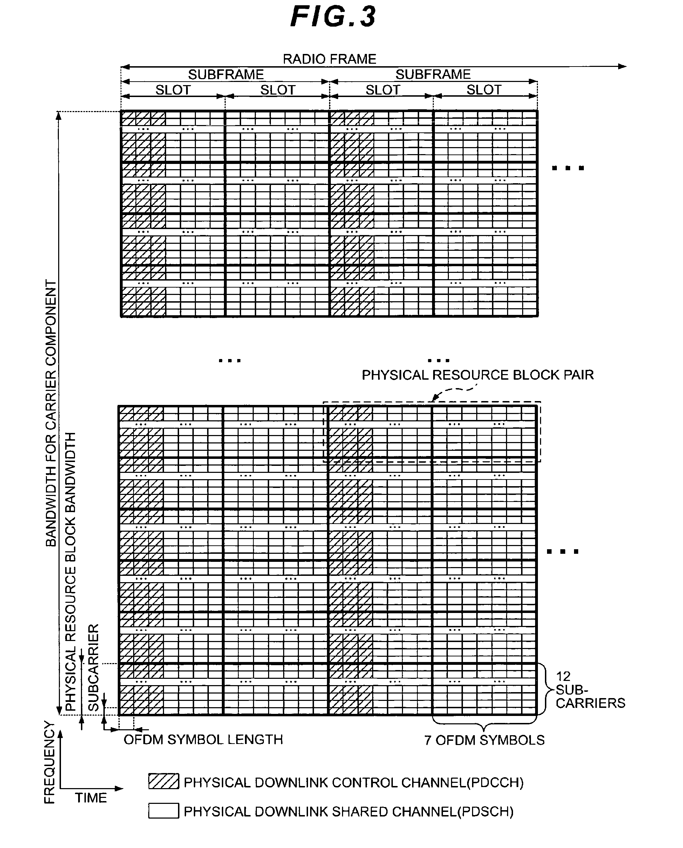

Fig. 3 is a schematic illustration showing one example of a configuration of a downlink radio frame according to the embodiment of the present invention. Fig. 3 shows the configuration of the radio frame in a certain downlink carrier component. In Fig. 3, a horizontal axis indicates a time domain and a vertical axis indicates a frequency domain. As shown in Fig. 3, the radio frame of the downlink carrier component is comprised of a plurality of downlink Physical Resource Block (PRB) pairs (for example, a region surrounded with a dashed line of Fig. 3). This downlink physical resource block pair is a unit of radio resource allocation, etc., and is comprised of a frequency band (PRB bandwidth; 180 kHz) with a predetermined width and a time zone (two slots are equal to one subframe; 1 ms).

One downlink physical resource block pair is comprised of continuous two downlink physical resource blocks (PRB bandwidth × slot) contiguous in the time domain. One downlink physical resource block (a unit surrounded with a thick line in Fig. 3) is comprised of twelve subcarriers (15 kHz) in the frequency domain and comprised of seven OFDM symbols (71 µs) in the time domain.

In the time domain, there are included a slot (0.5 ms) comprised of seven OFDM symbols (71 µs), a subframe (1 ms) comprised of two slots, and a radio frame (10 ms) comprised of ten subframes. In the frequency domain, the plurality of downlink physical resource blocks is arranged according to a bandwidth of the downlink carrier component. Note that a unit comprised of one subcarrier and one OFDM symbol is referred to as a downlink Resource Element (RE).

Hereinafter, a channel allocated in the downlink radio frame will be described. In each downlink subframe, for example, the physical downlink control channel, the physical downlink shared channel, and the downlink reference signal are allocated. The physical downlink control channel is arranged from the first OFDM symbol of the subframe, and the physical downlink shared channel is arranged at the remaining OFDM symbols of the subframe. Although an illustration of the downlink pilot channel is omitted in Fig. 3 for simplicity of description, the downlink pilot channel is distributedly arranged in the frequency domain and the time domain.

First, a signal arranged in the physical downlink control channel will be described. In the physical downlink control channel, arranged is a signal including Downlink Control Information (DCI), which is the information used for controlling communication, such as Downlink grant (alternatively, also referred to as "Downlink assignment") and Uplink grant. Note that the Downlink grant is comprised of information indicating a modulation scheme with respect to the physical downlink shared channel, information indicating a coding scheme, information indicating radio resource allocation, information regarding a HARQ (Hybrid Automatic Repeat Request), etc. In addition, the Uplink grant is comprised of information indicating a modulation scheme with respect to the physical uplink shared channel, information indicating the coding scheme, information indicating radio resource allocation, information regarding the HARQ, etc.

Note that the HARQ is a technology in which for example, when the mobile station apparatus 1 (base station apparatus 3) transmits success or failure (an ACK (ACKnowledgement)/an NACK (Negative-ACKnowledgement)) of decoding of data information to the base station apparatus 3 (mobile station apparatus 1), and the mobile station apparatus 1 (base station apparatus 3) cannot decode the data information due to an error (NACK), the base station apparatus 3 (mobile station apparatus 1) retransmits a signal, and the mobile station apparatus 1 (base station apparatus 3) performs decoding processing with respect to a composite signal of the signal received again and the already received signal.

To the downlink control information, added is a sequence in which exclusive OR is performed of a Cyclic Redundancy Check (CRC) code (error detecting code) generated from a bit sequence of the downlink control information and an identifier. The mobile station apparatus 1 can obtain the CRC code included in the downlink control information by performing exclusive OR with the same identifier as an identifier having used in the base station apparatus 3 with respect to a portion corresponding to the sequence of a received signal.

More specifically, if the mobile station apparatus 1 compares a CRC code generated from a bit sequence of decoded downlink control information with a CRC code included in the downlink control information, and both codes are the same as each other, the mobile station apparatus 1 recognizes that the downlink control information has been able to be decoded without error, and also recognizes that an identifier having used for extracting the CRC code included in the downlink control information has been used for the downlink control information. In addition, if the both codes are not the same as each other, the mobile station apparatus 1 recognizes that the downlink control information has been decoded erroneously, or that the downlink control information has been transmitted to another mobile station apparatus. The mobile station apparatus 1 can determine from the identifier included in the physical downlink control channel a type of the physical downlink shared channel in which the physical downlink control channel indicates radio resource allocation, and determine to which mobile station apparatus the physical downlink control channel has been transmitted.

For example, a Cell-Radio Network Temporary Identifier (C-RNTI), which is allocated to the mobile station apparatus 1 by the base station apparatus 3, is included in the physical downlink control channel (Uplink grant or Downlink grant), the mobile station apparatus 1 determines that the physical downlink control channel is the physical downlink control channel addressed to its own apparatus. In addition, when in the physical downlink control channel (Downlink grant), included is a Random Access-Radio Network Temporary Identifier (RA-RNTI) corresponding to a radio resource of the physical random access channel through which the mobile station apparatus 1 has transmitted the preamble, the mobile station apparatus 1 determines that the physical downlink control channel indicates radio resource allocation of the physical downlink shared channel in which a Random Access Response with respect to the preamble transmitted by the mobile station apparatus 1 itself may be included.

In addition, when in the physical downlink control channel (Uplink grant or Downlink grant), included is a Temporary Cell-Radio Network Temporary Identifier (Temporary C-RNTI) allocated to the base station apparatus 3 only while the mobile station apparatus 1 that has transmitted the preamble performs random access processing, the mobile station apparatus 1 determines that the physical downlink control channel is the Uplink grant regarding the message 3 or the Downlink grant regarding the message 4 with respect to the preamble transmitted by the mobile station apparatus 1 itself. In addition, when a System Information-Radio Network Temporary Identifier (SI-RNTI) specific to the base station apparatus 3 is included in the physical downlink control channel (Downlink grant), the mobile station apparatus 1 determines that the physical downlink control channel indicates radio resource allocation of the physical downlink shared channel including system information, which is setting information specific to a carrier component (for example, information regarding random access transmission of a corresponding uplink carrier component) broadcasted to a large indefinite number of mobile station apparatuses 1 by the base station apparatus 3.

In addition, when a Paging-Radio Network Temporary Identifier (P-RNTI) specific to the base station apparatus 3 is included in the physical downlink control channel (Downlink grant), the mobile station apparatus 1 determines that the physical downlink control channel indicates radio resource allocation of the physical downlink shared channel including incoming call information with respect to a group comprised of the plurality of mobile station apparatuses 1.

Next, a signal arranged in the physical downlink shared channel will be described. A signal including data information (Transport Block) is arranged in the physical downlink shared channel. In the embodiment, the Downlink grant and the physical downlink shared channel in which radio resource allocation is indicated by the Downlink grant are arranged in the same downlink carrier component in the same subframe. Note that the present invention is not limited to the above, and that the mobile station apparatus 1 identifies the downlink carrier component in which the physical downlink shared channel is arranged from the Downlink grant, and that the Downlink grant and the physical downlink shared channel in which radio resource allocation is indicated by the Downlink grant may be arranged in different downlink carrier components.

Hereinafter, a radio resource in which the physical downlink control channel is arranged will be described. The physical downlink control channel is arranged in one or more Control Channel Element (CCE). The CCE is comprised of a plurality of Resource Element Groups (REGs, or also referred to as mini-control channel elements) distributed in the frequency domain and the time domain in the downlink carrier component. The resource element group is comprised of four downlink resource elements continuous in the frequency domain excluding the downlink reference signal in the same OFDM symbol in the same downlink carrier component. For example, the physical downlink control channel is arranged in one, two, four, and eight control channel element(s) with continuous numbers for identifying the control channel element(s).

A common search space and a User Equipment-Specific Search Space are configured for each downlink carrier component. The common search space is configured in a predetermined CCE, and the User Equipment-Specific Search Space is configured based on the C-RNTI having allocated to the mobile station apparatus 1 by the base station apparatus 3. The common search space and the User Equipment-Specific Search Space are configured for each the number of control channel elements in which the physical downlink control channel is arranged. Specifically, in each downlink carrier component, two common search spaces in which the physical downlink control channels are arranged are configured in four and eight control channel elements, and four User Equipment-Specific Search Spaces in which the physical downlink control channels are arranged are configured in one, two, four, and eight control channel elements for each mobile station apparatus 1. In addition, two common search spaces are comprised of a common downlink CCE, and four User Equipment-Specific Search Spaces are comprised of different or a common downlink control channel element(s).

In the common search space, arranged are a physical downlink control channel including the RA-RNTI, the P-RNTI, the SI-RNTI, etc., which is addressed to the plurality of mobile station apparatuses 1, and a physical downlink control channel including the Temporary C-RNTI and the C-RNTI, which is addressed to a specific mobile station apparatus 1. In the User Equipment-Specific Search Space, arranged is a physical downlink control channel including the Temporary C-RNTI and the C-RNTI, which is addressed to a specific mobile station apparatus 1.

Note that the downlink control information, such as the Downlink grant and the Uplink grant, has a plurality of formats, and that the base station apparatus 3 selects a set of formats of the downlink control information to be monitored by the mobile station apparatus 1 in the User Equipment-Specific Search Space, and notifies the mobile station apparatus 1 of the set. In addition, the format of the downlink control information arranged in the common search space is preset, and all the mobile station apparatuses 1 monitor the downlink control information of the same format. The mobile station apparatus 1 determines the format of the downlink control information from a payload size (the number of bits) of the downlink control information arranged in the physical downlink control channel, and a flag included in the downlink control information, etc.

At least one same format is used for the downlink control information including the SI-RNTI, the P-RNTI, the C-RNTI, the Temporary C-RNTI, and the RA-RNTI that are arranged in the common search space. Namely, the mobile station apparatus 1 determines which identifier is included in the physical downlink control channel after performing decoding processing to the format with respect to a signal arranged in the physical downlink control channel in the common search space. As a result of this, even though the mobile station apparatus 1 simultaneously monitors the plurality of physical downlink control channels including the SI-RNTI, the P-RNTI, the C-RNTI, the Temporary C-RNTI, and the RA-RNTI in the common search space, a load of the decoding processing in the mobile station apparatus 1 does not increase since the decoding processing is in common with the physical downlink control channels.

In addition, the base station apparatus 3 sets for each mobile station apparatus 1 a downlink carrier component in which the mobile station apparatus 1 always monitors the physical downlink control channel in the common search space, and notifies the mobile station apparatus 1 of the set downlink carrier component. Hereinafter, referred to as a common search space component carrier is a downlink carrier component set for each mobile station apparatus 1 and set by the base station apparatus 3 so that the mobile station apparatus 1 may always monitor the physical downlink control channel in the common search space. In addition, referred to as a non-common search space component carrier is a downlink carrier component that is not set by the base station apparatus 3 so that the mobile station apparatus 1 may always monitor the physical downlink control channel in the common search space.

When the plurality of downlink carrier elements is allocated to the mobile station apparatus 1 by the base station apparatus 3, the mobile station apparatus 1 starts monitoring the physical downlink control channel (Downlink grant) including the SI-RNTI in the common search spaces of all the downlink carrier components allocated by the base station apparatus 3 in order to obtain system information broadcasted in each of the downlink carrier components, and completes monitoring of the common search space in the downlink carrier component if the mobile station apparatus 1 succeeds in receiving the system information in each of the downlink carrier components.

In addition, in incoming call information transmitted in each of the downlink carrier components, included is information to notify that system information of each of all the downlink carrier components that the base station apparatus 3 can use for communicating with the mobile station apparatus 1 has been changed, and when the mobile station apparatus 1 detects the information to notify that the system information of the downlink carrier component has been changed in the common search space component carrier, the mobile station apparatus 1 starts monitoring of the physical downlink control channel (Downlink grant) including the SI-RNTI in the common search space of the downlink carrier component in which the system information has been changed, the common search space of the downlink carrier component including the common search space component carrier and the non-common search space component carrier, and completes monitoring of the common search space in the downlink carrier component if the mobile station apparatus 1 succeeds in receiving the changed system information.

Note that a configuration of the system information of the present embodiment is not limited to the above-mentioned configuration, and the base station apparatus 3 may transmit as multi-carrier system information system information different from the system information of the downlink carrier component of the system information of all the other downlink carrier components in each of all the downlink carrier components that the base station apparatus 3 can use for communicating with the mobile station apparatus 1. By doing this, the mobile station apparatus 1 can obtain the system information of all the downlink carrier components only by monitoring the physical downlink control channel (Downlink grant) including the SI-RNTI in the common search space of one downlink carrier component.

### <Regarding uplink radio frame>

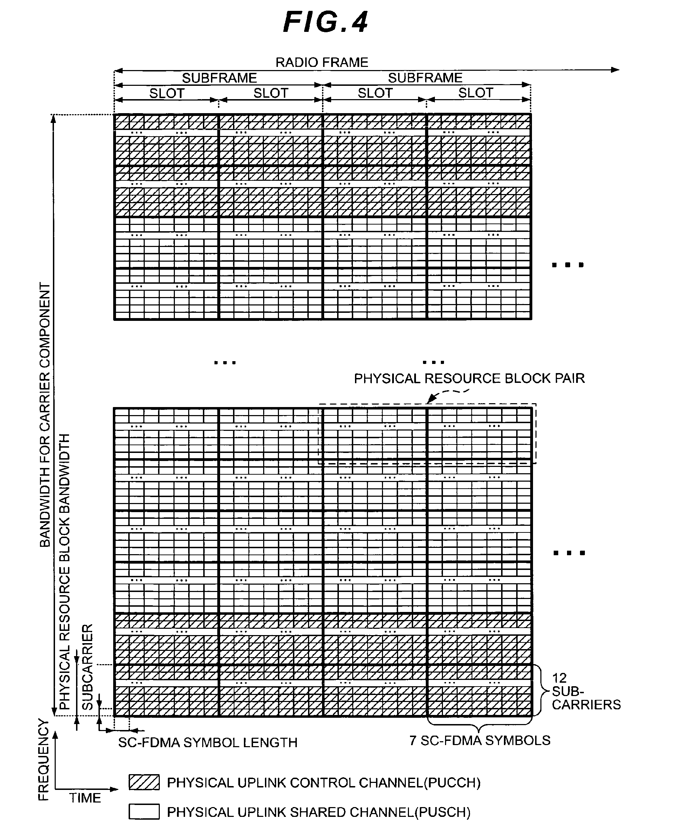

Fig. 4 is a schematic illustration showing one example of a configuration of an uplink radio frame according to the embodiment of the present invention. Fig. 4 shows the configuration of the radio frame in a certain uplink carrier component. In Fig. 4, a horizontal axis indicates a time domain and a vertical axis indicates a frequency domain. As shown in Fig. 4, the radio frame of the uplink carrier component is comprised of a plurality of uplink physical resource block pairs (for example, a region surrounded with a dashed line of Fig. 4). This uplink physical resource block pair is a unit of radio resource allocation, etc., and is comprised of a frequency band (PRB bandwidth; 180 kHz) with a predetermined width and a time zone (two slots are equal to one subframe; 1 ms).

One uplink physical resource block pair is comprised of continuous two uplink physical resource blocks (PRB bandwidth × slot) in the time domain. One uplink physical resource block (a unit surrounded with a thick line in Fig. 4) is comprised of twelve subcarriers (15 kHz) in the frequency domain and comprised of seven SC-FDMA symbols (71 µs) in the time domain. In the time domain, there are included a slot (0.5 ms) comprised of the seven SC-FDMA symbols (71 µs), a subframe (1 ms) comprised of two slots, and a radio frame (10 ms) comprised of ten subframes. In the frequency domain, the plurality of uplink physical resource blocks is arranged according to a bandwidth of the uplink carrier component. Note that a unit comprised of one subcarrier and one SC-FDMA symbol is referred to as an uplink resource element.

Hereinafter, a channel allocated in the uplink radio frame will be described. For example, a physical uplink control channel, a physical uplink shared channel, a physical random access channel, and an uplink reference signal are allocated in each uplink subframe. First, a signal arranged in the physical random access channel will be described. The physical random access channel (not shown) is arranged in a bandwidth of seventy-two uplink resource elements (corresponding to six physical resource blocks) in the frequency domain, and in a radio resource (random access resource) comprised of any of from one to three subframes in the time domain. In addition, an interval between subcarriers of the physical random access channel is 1.25 kHz or 7.5 kHz, and it is different from an interval between subcarriers of the physical uplink control channel or the physical uplink shared channel (15 kHz). The plurality of radio resources of the physical random access channel are allocated in a radio frame. Specific radio resource allocation and a configuration of the physical random access channel are notified to the mobile station apparatus 1 as broadcast information.

A preamble is arranged in the physical random access channel in order that the mobile station apparatus 1 and the base station apparatus 3 may be synchronized with each other. The preamble includes signatures, which are signal patterns representing information, and tens of types of signatures can be prepared to represent several bits of information.

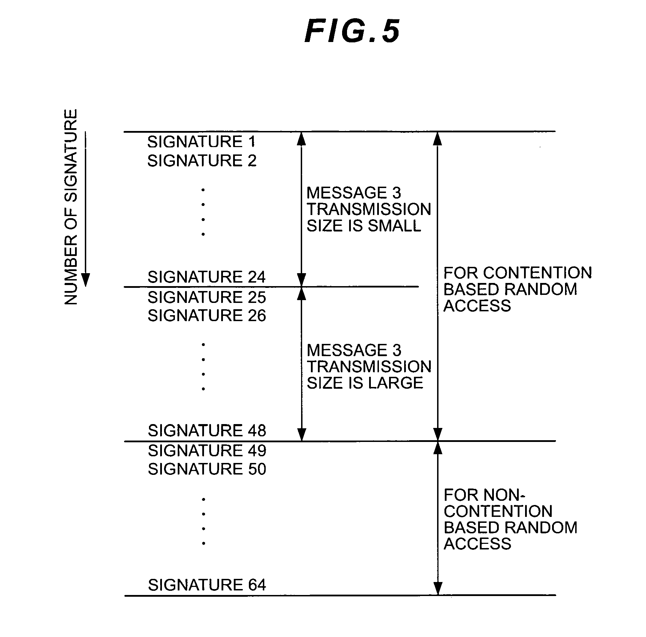

Fig. 5 is a schematic illustration showing one example of a configuration of signatures according to the embodiment of the present invention. In Fig. 5, a vertical axis indicates numbers of the signatures, signatures 1 to 48 are used for Contention based Random Access, and signatures 49 to 64 are used for Non-contention based Random Access.

The mobile station apparatus 1 that performs Contention based Random Access as a random access method selects the signatures 1 to 24 when a message size of the message 3 is small, selects the signatures 25 to 48 when the message size of the message 3 is large, and randomly selects one signature from the selected plurality of signatures. The signatures selected when the message size of the message 3 is small are usually selected when characteristics of a channel of the mobile station apparatus 1 are poor (or a distance between the mobile station apparatus 1 and the base station apparatus 3 is long), and the signatures selected when the message size of the message 3 is large are selected when the characteristics of the channel of the mobile station apparatus 1 are good (or the distance between the mobile station apparatus 1 and the base station apparatus 3 is short).

The mobile station apparatus 1 that performs Non-contention based Random Access as the random access method is notified of any one of signatures that the base station apparatus 3 has selected from the signatures 49 to 64. Information of the signatures from the base station apparatus 3 to the mobile station apparatus 1 is performed through the Downlink grant. The base station apparatus 3 shows signature allocation to the mobile station apparatus 1 by setting a specific field of the Downlink grant to be a specific code point, and shows the mobile station apparatus 1 to which the signature has been allocated by including in the Downlink grant the C-RNTI that the base station apparatus 3 has allocated to the mobile station apparatus 1 to be notified of the signature.

In the Downlink grant, included is information indicating the signature number selected by the base station apparatus 3, and the radio resource of the physical random access channel in the uplink carrier component. In addition, the base station apparatus 3 transmits the Downlink grant in the downlink carrier component corresponding to the uplink carrier component including the physical random access channel allocated to the mobile station apparatus 1, and the mobile station apparatus 1 recognizes the uplink carrier component in which the Downlink grant indicates the radio resource of the physical random access channel from the downlink carrier component in which the Downlink grant has been detected. Note that when fields indicating the numbers of the signatures of the Downlink grant are specific code points (for example, all of them are "0"), the mobile station apparatus 1 performs Contention based Random Access.

Next, a signal arranged in the physical uplink control channel will be described. The physical uplink control channel is allocated to the uplink physical resource block pairs (regions hatched with the rising oblique lines from bottom left to top right) of both ends of a bandwidth of the uplink carrier component. In the physical uplink control channel, arranged is a signal including Uplink Control Information (UCI) that is information used for controlling communication, such as channel quality information indicating a downlink channel quality, a Scheduling Request (SR) indicating a request for uplink radio resource allocation, and ACK/NACK with respect to the physical downlink shared channel. Note that the physical uplink control channel in which a signal including the scheduling request and the ACK/NACK is arranged is code-multiplexed in the frequency domain and the time domain, and that the physical uplink control channel in which a signal including the channel quality information is arranged is code-multiplexed in the frequency domain.

Next, a signal arranged in the physical uplink shared channel will be described. The physical uplink shared channel is allocated to uplink physical resource block pairs (regions without hatching) other than the physical uplink control channel and the physical random access channel. A signal including data information (Transport Block) is arranged in the physical uplink shared channel.

In the embodiment, the physical uplink shared channel in which radio resource allocation is indicated by the Uplink grant is arranged in an uplink carrier component corresponding to the downlink carrier component in which the mobile station apparatus 1 has received the Uplink grant, the uplink carrier component being in the subframe after a predetermined period. For example, in Fig. 2, uplink grant indicating radio resource allocation of the physical uplink shared channel of the UCC-1 is arranged in the physical downlink control channel of the DCC-1. Note that the present invention is not limited to the above, the mobile station apparatus 1 identifies the uplink carrier component in which the physical uplink shared channel is arranged from the Uplink grant, and that the Uplink grant and the physical uplink shared channel in which radio resource allocation is indicated by the Uplink grant may be arranged in different sets of the uplink carrier components and the downlink carrier components.

Next, an uplink reference signal will be described. A Demodulation Reference Signal (not shown) is arranged so as to be time-multiplexed with radio resource of the physical uplink shared channel and the physical uplink control channel. A Sounding Reference Signal (not shown) is arranged in a last SC-FDMA symbol in a subframe with a period set by the base station apparatus 3 for each mobile station apparatus 1 in the time domain, and is arranged in the frequency domain set by the base station apparatus 3 for each mobile station apparatus 1 in the frequency domain.

### <Regarding configuration of base station apparatus 3>

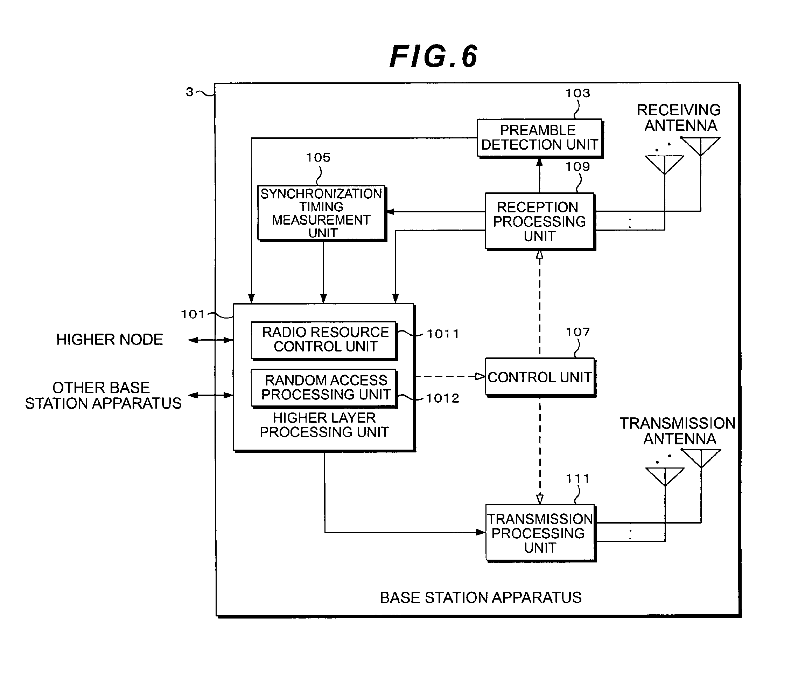

Fig. 6 is a schematic block diagram showing a configuration of the base station apparatus 3 according to the embodiment of the present invention. As shown in the drawing, the base station apparatus 3 is configured to include: a higher layer processing unit 101; a preamble detection unit 103; a synchronization timing measurement unit 105; a control unit 107; a reception processing unit 109; a plurality of reception antennas; a transmission processing unit 111; and a plurality of transmission antennas. In addition, the higher layer processing unit 101 is configured to include a radio resource control unit 1011 and a random access control unit 1012. Note that although the reception antenna and the transmission antenna have different configurations from each other in Fig. 6, antennas may be shared using a thyristor with action to switch input/output of a signal, etc.

The higher layer processing unit 101 outputs data information for each downlink carrier component to the transmission processing unit 111. In addition, the higher layer processing unit 101 performs processing of a Packet Data Convergence Protocol (PDCP) layer, a Radio Link Control (RLC) layer, and a Radio Resource Control (RRC) layer. The radio resource control unit 1011 of the higher layer processing unit 101 performs management of various setting information, a communication state, and a buffer condition of the each mobile station apparatus 1, etc. The random access control unit 1012 of the higher layer processing unit 101 performs control regarding random access of the each mobile station apparatus 1.

In the above-described processing, the radio resource control unit 1011 comprised in the higher layer processing unit 101 allocates the plurality of uplink carrier components and downlink carrier components to the mobile station apparatus 1 according to the number of the downlink carrier components and the uplink carrier components that can be used for radio communication by the base station apparatus 3, and the number of the downlink carrier components and the uplink carrier components that can be simultaneously transmitted or received by the mobile station apparatus 1, etc.

In addition, the radio resource control unit 1011 allocates a specific downlink carrier component of the plurality of downlink carrier components having allocated to the mobile station apparatus 1 as the downlink carrier component (common search space component carrier) in which the mobile station apparatus 1 always monitors the common search space. Namely, the radio resource control unit 1011 sets with respect to the mobile station apparatus 1 a specific common search space (a first common search space) of the common search spaces of the plurality of downlink carrier components being in radio communication with the mobile station apparatus 1. In addition, the radio resource control unit 1011 generates information to be arranged in each channel of the each downlink carrier component, or obtains it from a host node, and outputs it to the transmission processing unit 111 for each downlink carrier component. For example, the radio resource control unit 1011 generates a random access response, which is a kind of downlink control information and data information, and outputs it to the transmission processing unit 111.

In addition, the radio resource control unit 1011 allocates to the mobile station apparatus 1 a radio resource in which the mobile station apparatus 1 arranges the physical uplink shared channel (data information) of the radio resources of the uplink carrier components allocated to the mobile station apparatus 1. In addition, the radio resource control unit 1011 allocates a radio resource in which the physical downlink shared channel (data information) is arranged of the radio resources of the downlink carrier components. The radio resource control unit 1011 generates Downlink grant and Uplink grant indicating the radio resource allocation, and transmits them to the mobile station apparatus 1 through the transmission processing unit 111.

In addition, the radio resource control unit 1011 allocates to the mobile station apparatus 1 a radio resource in which the mobile station apparatus 1 arranges the physical uplink shared channel (data information) of the radio resources of the uplink carrier components allocated to the mobile station apparatus 1. In addition, the radio resource control unit 1011 allocates a radio resource in which the physical downlink shared channel (data information) is arranged of the radio resources of the downlink carrier components. The radio resource control unit 1011 generates Downlink grant and Uplink grant indicating the radio resource allocation, and transmits them to the mobile station apparatus 1 through the transmission processing unit 111.

The radio resource control unit 1011 selects the uplink carrier component based on control information from the random access control unit 1012, and allocates the radio resource in which the message 3 is arranged of the radio resources in the selected uplink carrier components. In addition, the radio resource control unit 1011 generates Uplink grant indicating the radio resource allocation, includes it in the random access response, and transmits it to the mobile station apparatus 1 through the transmission processing unit 111. Note that a CRC code and a C-RNTI are not included in the Uplink grant included in the random access response. In the random access response, included are an amount of synchronization timing shift with respect to each of the plurality of signatures input from the random access control unit 1012, a Temporary C-RNTI, and the Uplink grant generated by the radio resource control unit 1011.

In addition, the radio resource control unit 1011 generates control information in order to control the reception processing unit and the transmission processing unit based on uplink control information (ACK/NACK, channel quality information, a scheduling request) notified through the physical uplink control channel from the mobile station apparatus 1, and the buffer condition of the mobile station apparatus 1 and various setting information of the each mobile station apparatus 1 set by the radio resource control unit 1011, and outputs the control information to the control unit.

In the above-described processing, the random access control unit 1012 comprised in the higher layer processing unit 101 generates: broadcast information including information regarding random access, such as information indicating a configuration of the physical random access channel (radio resource allocation of the physical random access channel, etc.) and a transmission condition of the random access (a random access load); a random access response; a contention resolution; etc., and outputs the control information to the radio resource control unit 1011 so as to output to the transmission processing unit 111.

The random access control unit 1012 decides to instruct the mobile station apparatus 1 to transmit the preamble when synchronization is not established between the base station apparatus 3 and the mobile station apparatus 1 although there exists data information to be transmitted to the connected mobile station apparatus 1, etc. In this case, the random access control unit 1012 generates downlink control information to instruct transmission of the preamble to the mobile station apparatus 1, and outputs the control information to the radio resource control unit 1011 so as to output to the transmission processing unit 111.

The random access control unit 1012 outputs the signature number and the amount of synchronization timing shift to the radio resource control unit 1011 based on the physical random access channel information, the number of signature, and the amount of synchronization timing shift that have been input from the preamble detection unit 103, and outputs the control information to the radio resource control unit 1011 so as to generate a random access response in the radio resource control unit 1011. In addition, the random access control unit 1012 calculates an RA-RNTI from the physical random access channel information which has been input from the preamble detection unit 103, and in which the signature has been detected, and outputs the RA-RNTI to the radio resource control unit 1011.

The random access control unit 1012 selects the downlink carrier component paired with the uplink carrier component in which the preamble has been detected based on the physical random access channel information which has been input from the preamble detection unit 103 and in which the signature has been detected, and outputs the control information to the radio resource control unit 1011 so as to transmit the random access response in the selected downlink carrier component. In addition, the random access control unit 1012 selects the uplink carrier component in which the preamble has been detected, and outputs the control information to the radio resource control unit 1011 so as to allocate the radio resource in which the message 3 is transmitted of the radio resources of the selected uplink carrier components.

The random access control unit 1012 specifies the mobile station apparatus 1 that has transmitted the message 3 from the C-RNTI that identifies the mobile station apparatus 1 included in the message 3, and outputs the control information to the radio resource control unit 1011 so as to transmit a contention resolution in the downlink carrier component corresponding to the uplink carrier component in which the preamble has been detected. Note that a detailed procedure of the random access will be mentioned later.

The control unit 107 generates a control signal that performs control of the reception processing unit 109 and the transmission processing unit 111 based on the control information from the higher layer processing unit 101. The control unit 107 outputs the generated control signal to the reception processing unit 109 and the transmission processing unit 111, and performs control of the reception processing unit 109 and the transmission processing unit 111.

The reception processing unit 109 separates, demodulates, and decodes the received signal received from the mobile station apparatus 1 through the reception antenna according to the control signal input from the control unit 107, and outputs the decoded information to the higher layer processing unit 101. In addition, the reception processing unit 109 outputs a separated uplink reference signal to the synchronization timing measurement unit 105, and outputs the separated physical random access channel to the preamble detection unit 103.

Specifically, the reception processing unit 109 converts (down-converts) into an intermediate frequency the signal of the each uplink carrier component received through the each reception antenna, removes an unnecessary frequency component, controls an amplification level so that a signal level is maintained appropriately, orthogonally demodulates the signal based on an in-phase component and an orthogonal component of the received signal, and converts the orthogonally demodulated analog signal into a digital signal. The reception processing unit 109 removes a portion corresponding to a Guard Interval (GI) from the converted digital signal. The reception processing unit 109 performs Fast Fourier Transform (FFT) with respect to the signal whose Guard Interval has been removed, and extracts the signal in the frequency domain.

The reception processing unit 109 separates the extracted signals for each uplink carrier component into the signals arranged in the physical random access channel, the physical uplink control channel, the physical uplink shared channel, the demodulation reference signal, and the Sounding Reference Signal, respectively. In addition, since the physical uplink control channels are code-multiplexed, the reception processing unit 109 separates the physical uplink control channels using a code similar to the code used at a transmission side. Note that this separation is performed based on the allocation information of the radio resource that the base station apparatus 3 has previously decided and has notified each mobile station apparatus 1. In addition, the reception processing unit 109 calculates an estimate value of the channel from the separated uplink reference signal, and compensates the channels of the physical uplink control channel and the physical uplink shared channel.

The reception processing unit 109 outputs the separated physical random access channel to the preamble detection unit 103, and outputs the separated uplink reference signal to the synchronization timing measurement unit 105. The reception processing unit 109 performs Inverse Discrete Fourier Transform (IDFT) of the physical uplink shared channel, obtains a modulation symbol, and demodulates the received signal with respect to each modulation symbol of the physical uplink control channel and the physical uplink shared channel using a predetermined modulation scheme or a modulation scheme that the base station apparatus 3 has previously notified the each mobile station apparatus 1 in the Uplink grant, such as BPSK (Binary Phase Shift Keying), QPSK (Quadrature Phase Shift Keying), 16QAM (16 Quadrature Amplitude Modulation), and 64QAM (64 Quadrature Amplitude Modulation).

The reception processing unit 109 decodes a demodulated encoded bit of the physical uplink control channel and the physical uplink shared channel with a coding rate in the predetermined coding scheme that is predetermined or previously notified to the mobile station apparatus 1 by the base station apparatus 3 in the Uplink grant, and outputs the decoded data information and the uplink control information to the higher layer processing unit 101. The reception processing unit 109 measures electric power of the uplink reference signal received from the mobile station apparatus 1 and of the received signal of the physical uplink shared channel, etc., measures a received quality of the channel of the uplink carrier component, and outputs it to the higher layer processing unit 101.

The preamble detection unit 103 detects the plurality of preambles from the radio resource of the physical random access channel input from the reception processing unit 109, calculates the amount of synchronization timing shift from the each preamble, and outputs to the higher layer processing unit 101 the physical random access channel information in which the preambles have been detected, the numbers of the signatures having used for the detected preambles, and the amount of synchronization timing shift. In addition, the preamble detection unit 103 also regularly notifies a random access transmission condition of the mobile station apparatus 1 to the higher layer processing unit 101 from the detected number of the preambles. The synchronization timing measurement unit 105 measures the uplink reference signal input from the reception processing unit 109 for maintaining synchronization to thereby measure a synchronization timing shift, and reports the measurement result to the higher layer processing unit 101.

The transmission processing unit 111 generates a downlink reference signal according to the control signal input from the control unit 107, encodes and modulates the data information and the downlink control information that have been input from the higher layer processing unit 101, arranges them in the physical downlink control channel and the physical downlink shared channel, multiplexes them with the generated downlink reference signal, and transmits them to the mobile station apparatus 1 through the transmission antenna.

Specifically, the transmission processing unit 111 performs coding, such as turbo coding, convolution coding, and block coding, of the downlink control information of the each downlink carrier component and data information input from the higher layer processing unit 101 according to the control signal input from the control unit 107, and modulates the encoded bit with a modulation scheme, such as QPSK, 16QAM, and 64QAM. In addition, the transmission processing unit 111 generates as a downlink reference signal a known sequence of the mobile station apparatus 1 that can be calculated by a rule predetermined based on a Cell ID for identifying the base station apparatus 3, etc., and multiplexes the physical downlink control channel, the physical downlink shared channel, and the downlink reference signal.

The transmission processing unit 111 performs IFFT (Inverse Fast Fourier Transform) of the multiplexed modulation symbol to thereby perform modulation of an OFDM scheme, adds a guard interval to the OFDM-modulated OFDM symbol, generates a digital signal of a baseband, converts the digital signal of the baseband into an analog signal, generates an in-phase component and an orthogonal component of an intermediate frequency from the analog signal, removes excessive frequency components with respect to an intermediate frequency band, converts (up-converts) a signal with the intermediate frequency into a signal with a high frequency, removes excessive frequency components, amplifies electric power, and outputs to the transmission antenna to transmit.

### <Regarding configuration of mobile station apparatus 1>

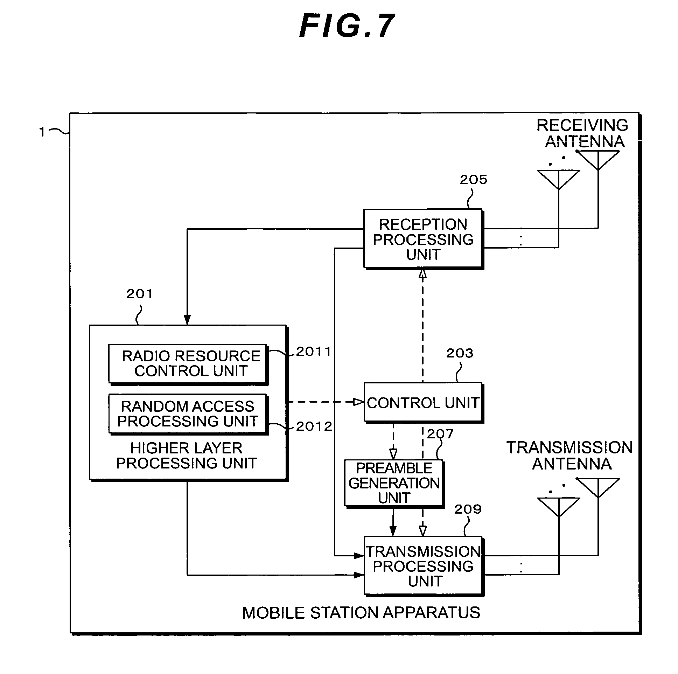

Fig. 7 is a schematic block diagram showing a configuration of a mobile station apparatus 1 according to the embodiment of the present invention. As shown in the drawing, the mobile station apparatus 1 is configured to include: a higher layer processing unit 201; a control unit 203; a reception processing unit 205; a plurality of reception antennas, a preamble generation unit 207; a transmission processing unit 209; and a plurality of transmission antennas. In addition, the higher layer processing unit 201 is configured to include a radio resource control unit 2011 and a random access processing unit 2012. Note that although the reception antenna and the transmission antenna have different configurations from each other in Fig. 7, antennas may be shared using a thyristor with action to switch input/output of a signal, etc.

The higher layer processing unit 201 outputs data information for each uplink carrier component generated by user operation etc. to the transmission processing unit 209. In addition, the higher layer processing unit 201 performs processing of a Packet Data Convergence Protocol layer, a radio link control layer, and a radio resource control layer. The radio resource control unit 2011 comprised in the higher layer processing unit 201 performs management of various setting information, a communication state, and a buffer condition of the mobile station apparatus 1 itself. The random access processing unit 2012 of the higher layer processing unit 201 performs control regarding the random access of the mobile station apparatus 1 itself.

In the above-described processing, the radio resource control unit 2011 comprised in the higher layer processing unit 201 manages various setting information, such as the downlink carrier component, the uplink carrier component, the common search space component carrier, and the C-RNTI allocated to the mobile station apparatus 1 itself. In addition, the radio resource control unit 2011 generates information to be arranged in each channel of the each uplink carrier component, and outputs it to the transmission processing unit 209 for each uplink carrier component. For example, when the radio resource of the message 3 is allocated to the radio resource control unit 2011 by the random access response, the radio resource control unit 2011 generates information to be transmitted by the message 3, and outputs it to the transmission processing unit 209.

In the above-described processing, the radio resource control unit 2011 comprised in the higher layer processing unit 201 manages various setting information, such as the downlink carrier component, the uplink carrier component, the common search space component carrier, and the C-RNTI allocated to the mobile station apparatus 1 itself. In addition, the radio resource control unit 2011 generates information to be arranged in each channel of the each uplink carrier component, and outputs it to the transmission processing unit 209 for each uplink carrier component. For example, when the radio resource of the message 3 is allocated to the radio resource control unit 2011 by the random access response, the radio resource control unit 2011 generates information to be transmitted by the message 3, and outputs it to the transmission processing unit 209.

For example, the radio resource control unit 2011 performs decoding processing of the physical downlink control channel in which the reception processing unit 205 is arranged in the common search space (first common search space) of the common search space component carrier, generates control information for controlling to monitor whether or not identifiers, such as the P-RNTI, the SI-RNTI, and the C-RNTI allocated to the mobile station apparatus 1 by the base station apparatus 3, are included in the physical downlink control channel, and outputs the control information to the control unit 203.

In the above-described processing, the random access processing unit 2012 comprised in the higher layer processing unit 201 manages information regarding random access, such as information indicating a configuration of the physical random access channel and a transmission condition of the random access that are notified from the base station apparatus 3. When the mobile station apparatus 1 itself receives the physical downlink control channel (Downlink grant) that instructs to start random access from the base station apparatus 3, and when there exists data information to be transmitted by the uplink, but the uplink radio resource is not allocated from the base station apparatus 3, etc., the random access processing unit 2012 starts random access.

When the mobile station apparatus itself is instructed to start random access by the physical downlink control channel (Downlink grant) from the base station apparatus 3, and the signature number and the radio resource of the physical random access channel are specified, the random access processing unit 2012 selects the specified signature and physical random access channel. In addition, when the signature and the radio resource of the physical random access channel are not specified by the base station apparatus 3, the random access processing unit 2012 decides a range of signatures to be selected according to information of a downlink channel quality, etc., randomly selects a signature from the selected range of the signatures, and further, randomly selects an uplink carrier component in which the preamble is transmitted and the radio resource of the physical random access channel.

In addition, the random access processing unit 2012 outputs the control information to the control unit 203 so that the preamble generation unit 207 may generate the preamble including the selected signature, and outputs the control information to the control unit 203 so that the transmission processing unit 209 may transmit the preamble with the radio resource of the selected physical random access channel.

The random access processing unit 2012 calculates an RA-RNTI corresponding to the radio resource with which the physical random access channel has been transmitted. In addition, the random access processing unit 2012 outputs the control information to the control unit 203 so that the reception processing unit 205 monitors the Downlink grant including the calculated RA-RNTI in the common search space (second common search space) of the downlink carrier component paired with the uplink carrier component in which the physical random access channel is transmitted during a random access receiving period, which is a predetermined period after transmitting the preamble.

When the signature number is specified by the base station apparatus 3, the random access processing unit 2012 determines to have succeeded in the random access if included is the signature number included in the preamble specified by the base station apparatus 3 and transmitted by the mobile station apparatus 1 itself in the random access response in which the Downlink grant including the calculated RA-RNTI indicates radio resource allocation, and completes processing regarding the random access processing.

When the signature number is not specified by the base station apparatus 3, the random access processing unit 2012 detects the signature number included in the preamble transmitted by the mobile station apparatus 1 itself in the random access response in which the Downlink grant including the calculated RA-RNTI indicates the radio resource allocation, and obtains an Uplink grant indicating the amount of synchronization timing shift, the Temporary C-RNTI, and the radio resource allocation of the message 3 corresponding to the detected signature. In addition, the random access processing unit 2012 outputs the control information to the control unit 203 so as to adjust a transmission timing of the uplink signal of the transmission processing unit 209 based on the amount of synchronization timing shift.

The random access processing unit 2012 outputs to the radio resource control unit 2011 the Uplink grant included in the random access response addressed to the mobile station apparatus 1 itself. In addition, the random access processing unit 2012 outputs the control information to the radio resource control unit 2011 so as to include the C-RNTI allocated to the base station apparatus 3 in the message 3 and to generate it.

The random access processing unit 2012 monitors the physical downlink control channel (Uplink grant) including the Temporary C-RNTI corresponding to the uplink carrier component in which the mobile station apparatus 1 itself has transmitted the preamble in the common search space (second common search space) of the downlink carrier component paired with the uplink carrier component in which the mobile station apparatus 1 itself has transmitted the physical random access channel during a contention resolution receiving period, which is a predetermined period after transmitting the message 3, and when the random access processing unit 2012 detects the physical downlink control channel (Uplink grant) including the Temporary C-RNTI, it outputs the physical downlink control channel to the radio resource control unit 2011, and outputs the control information to the radio resource control unit 2011 so as to retransmit the message 3.

In addition, the random access processing unit 2012 monitors the physical downlink control channel (Uplink grant or Downlink grant) including the C-RNTI in the common search space (second common search space) of the downlink carrier component paired with the uplink carrier component in which the physical random access channel is transmitted and in the User Equipment-Specific Search Space during the contention resolution receiving period, and when the random access processing unit 2012 detects the physical downlink control channel including at least one C-RNTI, it determines to have succeeded in the random access, and completes processing regarding the random access. Note that a detailed procedure of the random access will be mentioned later.

The control unit 203 generates a control signal that performs control of the reception processing unit 205, the preamble generation unit 207, and the transmission processing unit 209 based on the control information from the higher layer processing unit 201. The control unit 203 outputs the generated control signal to the reception processing unit 205, the preamble generation unit 207, and the transmission processing unit 209, and performs control of the reception processing unit 205, the preamble generation unit 207, and the transmission processing unit 209.

The reception processing unit 205 demodulates and decodes the received signal received from the base station apparatus 3 through the reception antenna according to the control signal input from the control unit 203, and outputs the decoded information to the higher layer processing unit 201. In addition, the reception processing unit 205 generates channel quality information based on a received quality of the detected downlink reference signal, etc., and outputs it to the higher layer processing unit 201 and the transmission processing unit 209.

Specifically, the reception processing unit 205 converts (down-converts) into an intermediate frequency the signal of the each uplink carrier component received through the each reception antenna, removes unnecessary frequency components, controls an amplification level so that a signal level is maintained appropriately, and orthogonally demodulates the signal based on an in-phase component and an orthogonal component of the received signal, and converts the orthogonally demodulated analog signal into a digital signal. The reception processing unit 205 removes a portion corresponding to the guard interval from the converted digital signal. The reception processing unit 205 performs FFT with respect to the signal from which the guard interval has been removed, and extracts the signal of the frequency domain.

The reception processing unit 205 separates the extracted signals into the signals arranged in the physical downlink control channel, the physical downlink shared channel, and the downlink reference signal, respectively for each downlink carrier component. Note that this separation is performed based on the radio resource allocation information notified through the Downlink grant, etc. In addition, the reception processing unit 205 calculates an estimate value of the channel from the separated downlink reference signal, and compensates the channels of the physical downlink control channel and the physical downlink shared channel. In addition, the reception processing unit 205 generates channel quality information based on the received quality of the separated downlink reference signal, etc., and outputs it to the higher layer processing unit 201 and the transmission processing unit 209.

The reception processing unit 205 demodulates the physical downlink control channel using a QPSK modulation scheme, monitors the Downlink grant and the Uplink grant including the C-RNTI allocated to the mobile station apparatus 1 itself by the base station apparatus 3, and the Downlink grant including the RA-RNTI corresponding to the radio resource of the physical random access channel with which the mobile station apparatus 1 itself has transmitted the preamble, and tries to decode the physical downlink control channel. When the reception processing unit 205 has succeeded in decoding of the physical downlink control channel, it outputs the decoded downlink control information to the higher layer processing unit 201. The reception processing unit 205 demodulates the physical downlink shared channel using a modulation scheme, such as QPSK, 16QAM, and 64QAM, notified through the Downlink grant, decodes a coding rate notified through the Downlink grant, and outputs the decoded data information to the higher layer processing unit 201.

The preamble generation unit 207 generates a preamble including the signature selected by the random access processing unit 2012 according to the control signal input from the control unit 203, and outputs it to the transmission processing unit 209. The transmission processing unit 209 generates an uplink reference signal according to the control signal input from the control unit 203, encodes and modulates the data information input from the higher layer processing unit 201 and the channel quality information input from the reception processing unit 205, arranges them in the physical uplink shared channel and the physical uplink control channel, multiplexes them with the generated uplink reference signal, and transmits them to the base station apparatus 3 through the transmission antenna. In addition, the transmission processing unit 209 arranges the preamble input from the preamble generation unit 207 in the physical random access channel according to the control signal input from the control unit 203, and transmits it to the base station apparatus 3 through the transmission antenna.

Specifically, the transmission processing unit 209 performs coding, such as turbo coding, convolution coding, and block coding, of the uplink control information of the each uplink carrier component and data information input from the higher layer processing unit 201 and reception processing unit 205 according to the control signal input from the control unit 203, and modulates the encoded bit with the modulation scheme, such as BPSK, QPSK, 16QAM, and 64QAM.

The transmission processing unit 209 generates as an uplink reference signal a known sequence of the base station apparatus 3 that can be calculated by a rule predetermined based on a Cell ID for identifying the base station apparatus 3, etc. The transmission processing unit 209 multiplies a modulation symbol of the physical uplink control channel by a code for code multiplexing, and performs Discrete Fourier Transform (DFT) after rearranging the modulation symbols of the physical uplink shared channel in parallel, and multiplexes them with the generated uplink reference signal. In addition, the transmission processing unit 209 arranges the preamble input from the preamble generation unit 207 in the physical random access channel.

The transmission processing unit 209 performs IFFT of the multiplexed signal, and modulate it using an SC-FDMA scheme, adds the guard interval to the SC-FDMA-modulated SC-FDMA symbol, generates a digital signal of a baseband, converts the digital signal of the baseband into an analog signal, generates an in-phase component and an orthogonal component of an intermediate frequency from the analog signal, removes excessive frequency components with respect to an intermediate frequency band, converts (up-converts) a signal with the intermediate frequency into a signal with a high frequency, removes excessive frequency components, amplifies electric power, and outputs to the transmission antenna to transmit.

### <Regarding operation of radio communication system>

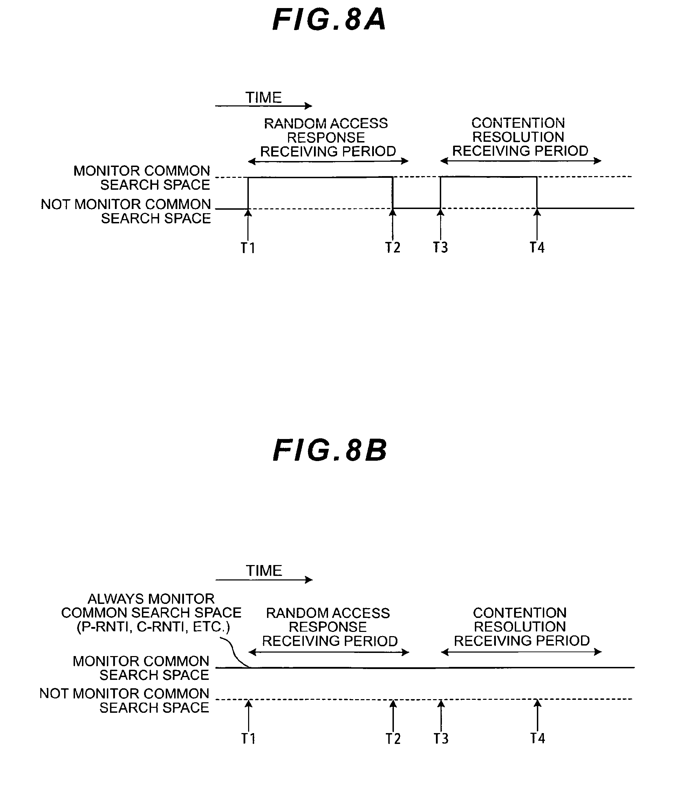

Hereinafter, an operation of a mobile station apparatus will be described. Figs. 8A and 8B are illustrations showing one example of an operation that switches monitoring of a common search space according to the embodiment of the present invention.

Fig. 8A shows one example of an operation that switches monitoring of a common search space (second common search space) in a non-common search space component carrier when the mobile station apparatus 1 according to the embodiment of the present invention performs Contention based Random Access as a random access method. In Fig. 8A, a horizontal axis indicates a time domain, and a vertical axis indicates switching whether to monitor the common search space.

First, at a time T1, the mobile station apparatus 1 decides a range of the signatures to be selected from channel quality information of the downlink carrier component, etc., randomly selects a signature from the selected range of the signatures, randomly selects the uplink carrier component and the radio resource of the physical random access channel in which the preamble is transmitted from the uplink carrier components allocated by the base station apparatus 3, and transmits the preamble including the signature selected in the physical random access channel of the selected uplink carrier component (Message 1 (M1)). When the downlink carrier component corresponding to the uplink carrier component selected to transmit the message 1 is a non-common search space component carrier, the mobile station apparatus 1 starts monitoring of the Downlink grant including the RA-RNTI in the common search space of the downlink carrier component from the time T1.

When the base station apparatus 3 detects the preamble transmitted from the mobile station apparatus 1 in the uplink carrier component, it calculates from the preamble an amount of synchronization timing shift between the mobile station apparatus 1 and the base station apparatus 3, performs scheduling (specification of uplink radio resource allocation, a transmission format (message size), etc.) for transmitting the message 3 in the uplink carrier component in which the mobile station apparatus 1 has transmitted the preamble, generates the Uplink grant indicating a result of the scheduling, and allocates the Temporary C-RNTI to the mobile station apparatus 1 that has transmitted the preamble.

The base station apparatus 3 generates a random access response including the generated Uplink grant, the amount of synchronization timing shift, the Temporary C-RNTI allocated to the mobile station apparatus 1, and the signature number of the detected preamble, and transmits it through the physical downlink shared channel of the downlink carrier component to which the uplink carrier component in which the preamble has been detected corresponds. In addition, the base station apparatus 3 includes the RA-RNTI corresponding to the radio resource of the physical random access channel in which the preamble has been detected in the Downlink grant indicating the radio resource allocation of the random access response, and transmits the Downlink grant in the common search space of the same downlink carrier component as the downlink carrier component in which the physical downlink shared channel is transmitted (Message 2 (M2)).

When at a time T2, the mobile station apparatus 1 confirms the Downlink grant including the RA-RNTI corresponding to the radio resource of the physical random access channel in which the preamble has been transmitted in the common search space of the downlink carrier component corresponding to the uplink carrier component in which the preamble has been transmitted, it confirms the random access response arranged in the physical downlink shared channel in which the Downlink grant indicates the radio resource allocation. When the mobile station apparatus 1 confirms that the signature number included in the preamble transmitted by the mobile station apparatus 1 itself is included in the random access response, it determines to have succeeded in receiving the message 2, and completes monitoring of the Downlink grant including the RA-RNTI in the common search space of the non-common search space component carrier.

In addition, the mobile station apparatus 1 extracts from the random access response a response including the signature number included in the preamble transmitted by its own apparatus, and corrects the synchronization timing shift. Further, at a time T3, the mobile station apparatus 1 includes the C-RNTI previously notified from the base station apparatus 3 in the physical uplink shared channel in the radio resource of the uplink carrier component to which the radio resource has been allocated by the Uplink grant included in the random access, and transmits the C-RNTI in the same uplink carrier component as the uplink carrier component in which the preamble has been transmitted (Message 3 (M3)).

When the base station apparatus 3 has received the message 3 from the mobile station apparatus 1 in the uplink carrier component, and has failed to decode it, it transmits the Uplink grant that includes the Temporary C-RNTI and instructs to retransmit the message 3 in the common search space of the downlink carrier component to which the uplink carrier component in which the message 3 has been received corresponds. Alternatively, the base station apparatus 3 transmits a negative acknowledgement, an NACK through the PHICH of the downlink carrier component to which the uplink carrier component in which the message 3 has been received corresponds. When the base station apparatus 3 has received the message 3 from the mobile station apparatus 1 in the uplink carrier component, and has succeeded in decoding it, the base station apparatus 3 notifies the mobile station apparatus 1 of having succeeded in decoding the message 3 including the C-RNTI by transmitting the physical downlink control channel including the C-RNTI included in the received message 3 (Message 4 (M4)).

From the time T3, the mobile station apparatus 1 starts monitoring of the Uplink grant including the Temporary C-RNTI notified by the random access response in the common search space of the downlink carrier component corresponding to the uplink carrier component in which the preamble has been transmitted. When the mobile station apparatus 1 detects the Uplink grant including the Temporary C-RNTI, it retransmits the message 3 according to the Uplink grant.

In addition, from the time T3, the mobile station apparatus 1 monitors the physical downlink control channel including the C-RNTI in the common search space of the downlink carrier component corresponding to the uplink carrier component in which the preamble has been transmitted and in the User Equipment-Specific Search Space. When the mobile station apparatus 1 detects the physical downlink control channel including the C-RNTI, it determines to have succeeded in the contention resolution, and completes monitoring of the physical downlink control channel including the Temporary C-RNTI and the C-RNTI in the common search space of the non-common search space component carrier.

Note that when the mobile station apparatus 1 does not receive the random access response including the signature number of the preamble having transmitted by the mobile station apparatus 1 within the random access response receiving period, or when the mobile station apparatus 1 does not detect its identification information in the contention resolution receiving period, it starts over from selection of the signature, the uplink carrier component in which the preamble is transmitted, and the radio resource of the physical random access channel.

Fig. 8B shows one example of an operation that switches monitoring of a common search space (first common search space) in a common search space component carrier when the mobile station apparatus 1 according to the embodiment of the present invention performs Contention based Random Access as the random access method. In Fig. 8B, a horizontal axis indicates a time domain, and a vertical axis indicates switching whether to monitor the common search space. In the common search space component carrier, the mobile station apparatus 1 monitors the physical downlink control channel always including the P-RNTI, the C-RNTI, etc. in the common search space. From the time T1 when the mobile station apparatus 1 transmits the preamble to the time T2 when the mobile station apparatus 1 succeeds in receiving the random access response, the mobile station apparatus 1 monitors whether or not in the physical downlink control channel to which decoding processing is always performed in the common search space, included is the RA-RNTI corresponding to the radio resource of the physical random access channel in which the mobile station apparatus 1 has transmitted the preamble in addition to the P-RNTI, the C-RNTI, etc. that are always monitored.

In addition, from the time T3 when the mobile station apparatus 1 transmits the message 3 to the time T4 when the mobile station apparatus 1 determines to have succeeded in the contention resolution, the mobile station apparatus 1 monitors whether or not in the physical downlink control channel in which decoding processing is always performed in the common search space, included is the Temporary C-RNTI having notified to the mobile station apparatus 1 by the random access response in addition to the P-RNTI, the C-RNTI, etc. that are always monitored.

Note that when the mobile station apparatus 1 performs Non-contention based Random Access as the random access method, it selects the signature having notified from the base station apparatus 3 using the Downlink grant at the time T1 in Figs. 8A and 8B, selects the uplink carrier component corresponding to the downlink carrier component in which the Downlink grant has been detected, selects the radio resource of the physical random access channel having notified from the base station apparatus 3 using the Downlink grant from the radio resources of the physical random access channel of the selected uplink carrier component, and transmits the preamble including the signature selected in the physical random access channel of the selected uplink carrier component. In addition, when the downlink carrier component corresponding to the uplink carrier component selected by the mobile station apparatus 1 to transmit the message 1 is the non-common search space carrier component, the mobile station apparatus 1 starts monitoring of the Downlink grant including the RA-RNTI in the common search space of the downlink carrier component from the time T1.

When at a time T2, the mobile station apparatus 1 confirms the Downlink grant including the RA-RNTI corresponding to the radio resource of the physical random access channel in which the preamble has been transmitted in the common search space of the downlink carrier component corresponding to the uplink carrier component in which the preamble has been transmitted, it confirms the random access response arranged in the physical downlink shared channel in which the Downlink grant indicates the radio resource allocation. When the mobile station apparatus 1 confirms that the signature number included in the preamble having transmitted by the mobile station apparatus 1 itself is included in the random access response, it determines to have succeeded in the random access, and completes monitoring of the Downlink grant including the RA-RNTI in the common search space of the non-common search space component carrier. Note that since an operation of the base station apparatus 3 when the mobile station apparatus 1 performs Non-contention based Random Access is the same as the operation in the case of performing the Contention based Random Access, description of the operation will be omitted.

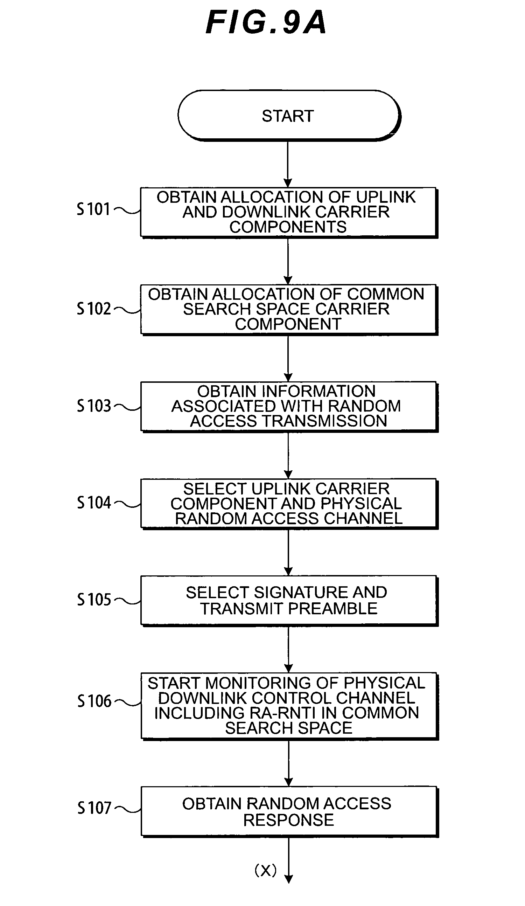

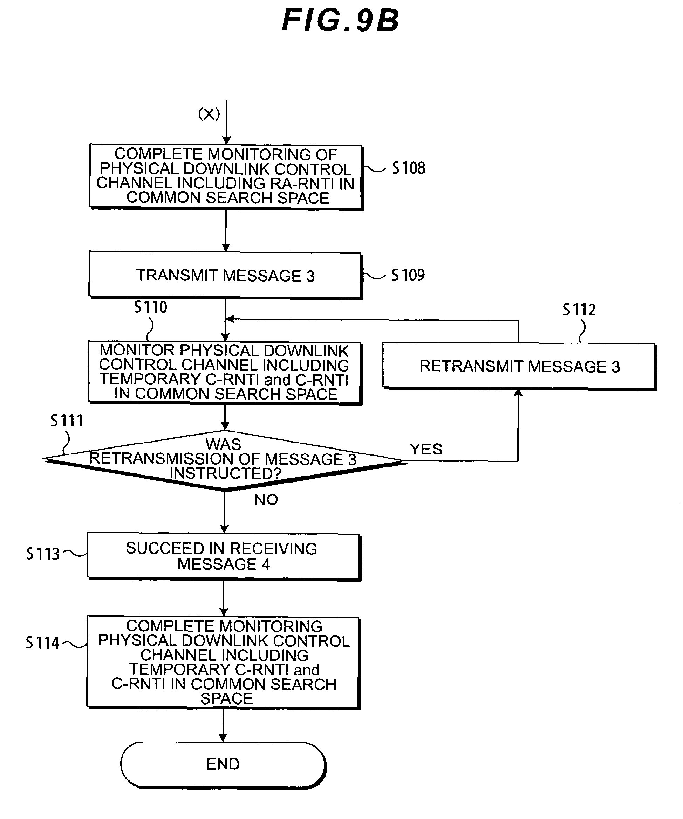

Figs. 9A and 9B are flow charts showing one example of an operation of the mobile station apparatus 1 according to the embodiment of the present invention. Figs. 9A and 9B show flow charts when the mobile station apparatus 1 performs Contention based Random Access as the random access method. The mobile station apparatus 1 obtains setting of the uplink and downlink carrier components used for frequency band aggregation notified from the base station apparatus 3 (step S101). Next, the mobile station apparatus 1 obtains allocation of the common search space component carrier in which the mobile station apparatus 1 always monitors the physical downlink control channel in the common search space among the downlink carrier components notified from the base station apparatus 3 and set in step S101 (step S102). Subsequently, the mobile station apparatus 1 obtains information regarding random access transmission of the uplink carrier component to which each downlink carrier component corresponds, which is broadcasted in the each downlink carrier component allocated by the base station apparatus 3 in step S101 (step S103).

The mobile station apparatus 1 selects the uplink carrier component in which the preamble is transmitted, and the radio resource of the physical random access channel based on a channel quality of the downlink carrier component (step S104). Next, the mobile station apparatus 1 randomly selects the signature, and transmits the preamble including the signature selected in the radio resource of the physical random access channel selected in step S104 (step S105). Subsequently, just after transmitting the preamble, the mobile station apparatus 1 starts monitoring of the Downlink grant including the RA-RNTI corresponding to the radio resource of the physical random access channel in which the preamble has been transmitted in the common search space (second common search space) of the downlink carrier component to which the uplink carrier component in which the preamble has been transmitted corresponds (step S106).

When the mobile station apparatus 1 detects the Downlink grant including the RA-RNTI corresponding to the radio resource of the physical random access channel in which the preamble has been transmitted in the common search space (second common search space) started to be monitored in step S106, it obtains the random access response from the physical downlink shared channel in which the physical downlink control channel indicates the radio resource allocation (step S107). In addition, the mobile station apparatus 1 extracts a response including the signature number included in the preamble transmitted by the mobile station apparatus 1 itself from the random access response, and obtains the Uplink grant, the amount of synchronization timing shift, and the Temporary C-RNTI. When the mobile station apparatus 1 confirms that the signature number included in the preamble transmitted by the mobile station apparatus 1 itself is included in the random access response, it determines to have succeeded in receiving the message 2, and completes monitoring of the Downlink grant including the RA-RNTI in the common search space (second common search space) (step S108).

The mobile station apparatus 1 transmits the message 3 in the same uplink carrier component as the uplink carrier component in which the preamble has been transmitted according to the Uplink grant having obtained in step S107 (step S109). Just after transmitting the message 3, the mobile station apparatus 1 starts monitoring of the Uplink grant including the Temporary C-RNTI notified by the random access response in the common search space (second common search space) of the downlink carrier component to which the uplink carrier component in which the preamble has been transmitted corresponds (step S110). In addition, when the downlink carrier component is the non-common search space carrier component, the mobile station apparatus 1 starts monitoring of the physical downlink control channel (Uplink grant or Downlink grant) including the C-RNTI in the common search space of the downlink carrier component.

When the mobile station apparatus 1 is instructed to retransmit the message 3 through the Uplink grant including the Temporary C-RNTI or the PHICH (step S111), it retransmits the message 3 (step S112). Next, the mobile station apparatus 1 continues monitoring of the Uplink grant including the Temporary C-RNTI notified by the random access response in the common search space (second common search space) of the downlink carrier component to which the uplink carrier component in which the preamble has been transmitted corresponds (step S110).

When the mobile station apparatus 1 is not instructed to retransmit the message 3 (step S111), if it detects the physical downlink control channel including the C-RNTI that the mobile station apparatus 1 itself has been allocated in the downlink carrier component to which the uplink carrier component in which the preamble has been transmitted corresponds, it determines to have succeeded in the contention resolution (step S113).

If the mobile station apparatus 1 determines to have succeeded in the contention resolution, it completes monitoring of the Downlink grant including the Temporary C-RNTI having notified by the random access response in the common search space (second common search space) of the downlink carrier component to which the uplink carrier component in which the preamble has been transmitted corresponds (step S114). In addition, when the downlink carrier component is the non-common search space carrier component, the mobile station apparatus 1 completes monitoring of the physical downlink control channel including the C-RNTI in the common search space (second common search space) of the downlink carrier component (step S114). After step S114, the mobile station apparatus 1 complete processing regarding the random access.

Note that although the radio resource of the physical random access channel has been allocated to all the uplink carrier components in the embodiment, an uplink carrier component to which the radio resource of the physical random access channel is not allocated may be included in frequency band aggregation. In this case, information regarding random access transmission is not broadcasted in the downlink carrier component corresponding to the uplink carrier component, and the mobile station apparatus 1 does not select the uplink carrier component as the uplink carrier component in which the preamble is transmitted.

As described above, according to the embodiment, a specific common search space is set for the mobile station apparatus 1 by the base station apparatus 3 among the common search spaces of the plurality of downlink carrier components being in radio communication, the mobile station apparatus 1 performs monitoring of the physical downlink control channel in the specific first common search space, and also starts random access processing in one arbitrary physical random access channel of the physical random access channels corresponding to the respective downlink carrier components, and monitors the physical downlink control channel regarding the random access in the second common search space of the downlink carrier component to which the physical random access channel in which the random access processing has been started corresponds until succeeding in the random access.

As a result of this, since the mobile station apparatus 1 can start random access processing in all the uplink carrier components set by the base station apparatus 3, and thus the uplink carrier components in which the mobile station apparatus 1 starts random access processing are distributed, the plurality of mobile station apparatuses 1 selects the radio resource of the same signature number and physical random access channel, a probability of causing collision of the physical random access channels is also distributed, and thus collision of the physical random access channels can be avoided from frequently occurring in the specific uplink carrier component. In addition, since the mobile station apparatus 1 monitors the physical downlink control channel including the C-RNTI allocated to the mobile station apparatus 1 itself in the common search space (second common search space) of the downlink carrier component to which the physical random access channel in which the random access processing has been started corresponds until it succeeds in the random access, a degree of freedom of arrangement of the physical downlink control channel including the C-RNTI increases.

In addition, according to the embodiment, a specific common search space is set for the mobile station apparatus 1 by the base station apparatus 3 among the common search spaces of the plurality of downlink carrier components being in radio communication, the mobile station apparatus 1 performs monitoring of the physical downlink control channel in the specific first common search space, and starts random access processing in the physical random access channel having instructed in the physical downlink control channel from the base station apparatus 3 among the physical random access channels corresponding to the respective downlink carrier components, and monitors the physical downlink control channel regarding the random access in the second common search space of the downlink carrier component to which the physical random access channel in which the random access processing has been started corresponds until succeeding in the random access. As a result of this, the base station apparatus 3 can select the uplink carrier component to be instructed to start random access processing from all the uplink carrier components allocated to the mobile station apparatus 1.

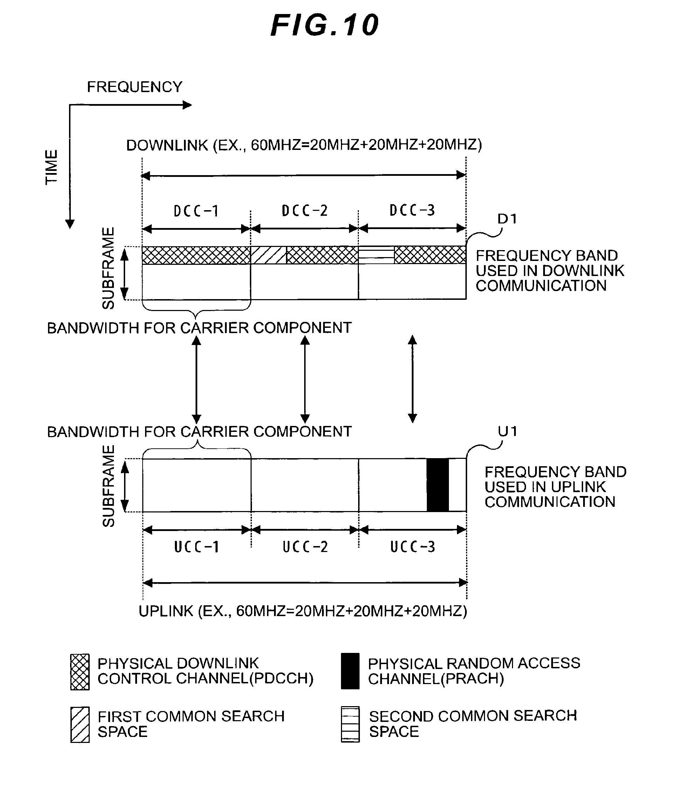

Fig. 10 is a conceptual illustration showing a configuration of the common search space according to the embodiment of the present invention. In Fig. 10, a horizontal axis indicates a frequency domain and a vertical axis indicates a time domain. Fig. 10 shows an example where the base station apparatus 3 allocates three downlink carrier components (DCC-1, DCC-2, and DCC-3) and three uplink carrier components (UCC-1, UCC-2, and UCC-3) to the mobile station apparatus 1 and further, the mobile station apparatus 1 is set to always monitor the first common search space hatched with an oblique line of the DCC-2.

When the mobile station apparatus 1 set as described above transmits the preamble through the physical random access channel hatched with black color of the UCC-3, it monitors the physical downlink control channel regarding the random access processing in the second common search space hatched with a horizontal line of the DCC-3 to which the UCC-3 corresponds in addition to the first common search space during the random access processing. Namely, the mobile station apparatus 1 extends the common search space to be monitored to the second common search space in addition to the first common search space during the random access processing.

A program that operates in the base station apparatus 3 and the mobile station apparatus 1 according to the present invention may be the program (program that makes a computer operate) that controls a CPU (Central Processing Unit) etc. so as to achieve functions in the above-mentioned embodiment according to the present invention. Additionally, information dealt with in these apparatuses is temporarily stored in a RAM (Random Access Memory) at the time of processing thereof and subsequently, stored in various ROMs, such as a Flash ROM (Read Only Memory), and a HDD (Hard Disk Drive), and read, corrected/written by the CPU if needed.

(A) In addition, it is also possible for the present invention to employ the following embodiment. Namely, a mobile station apparatus according to the embodiment is the mobile station apparatus applied to a communication system in which a base station apparatus allocates a plurality of downlink carrier components including a common search space to be monitored in common together with any other mobile station apparatus to any mobile station apparatus, and the mobile station apparatus is **characterized in that** when random access to the base station apparatus is performed, a monitored object of a physical downlink control channel of the common search space is extended from a first common search space of the downlink carrier component instructed to be monitored from the base station apparatus to a second common search space of any downlink carrier component other than the downlink carrier component including the first common search space.

As described above, since the monitored object of the physical downlink control channel of the common search space is extended from the first common search space of the downlink carrier component instructed to be monitored from the base station apparatus to the second common search space of any downlink carrier component other than the downlink carrier component including the first common search space, the mobile station apparatus can start random access processing in all the uplink carrier components set by the base station apparatus, and the uplink carrier components in which the mobile station apparatus starts the random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink carrier component.

(B) In addition, a mobile station apparatus according to the embodiment is the mobile station apparatus which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, the mobile station apparatus is characterized by comprising a random access processing unit that monitors the physical downlink control channel in a first common search space that is set by the base station apparatus and that is a specific common search space in the common search spaces of the plurality of downlink carrier components being in radio communication, and that also starts random access processing in any one of random access resources corresponding to the respective downlink carrier components, and that monitors the physical downlink control channel regarding random access in a second common search space included in the downlink carrier component to which the random access resource in which the random access processing has been started corresponds.

As described above, since the mobile station apparatus starts random access processing in any one of random access resources corresponding to the respective downlink carrier components, and monitors the physical downlink control channel regarding random access in the second common search space included in the downlink carrier component to which the random access resource in which the random access processing has been started corresponds, it can start random access processing in all the uplink carrier components set by the base station apparatus.

(C) In addition, a mobile station apparatus according to the embodiment is the mobile station apparatus which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, the mobile station apparatus is characterized by comprising a random access processing unit that monitors the physical downlink control channel in a first common search space that is set by the base station apparatus and that is a specific common search space in the common search spaces of the plurality of downlink carrier components being in radio communication, and that also starts random access processing in a random access resource notified from the base station apparatus among the random access resources corresponding to the respective downlink carrier components, and that monitors the physical downlink control channel regarding random access in a second common search space included in the downlink carrier component to which the random access resource in which the random access processing has been started corresponds.

As described above, since the mobile station apparatus starts random access processing in the random access resource notified from the base station apparatus among the random access resources corresponding to the respective downlink carrier components, and monitors the physical downlink control channel regarding random access in the second common search space included in the downlink carrier component to which the random access resource in which the random access processing has been started corresponds, the base station apparatus can select the uplink carrier component to be instructed to start random access processing from all the uplink carrier components allocated to the mobile station apparatus by the base station apparatus.

(D) In addition, the mobile station apparatus according to the embodiment is **characterized in that** the random access processing unit monitors the physical downlink control channel addressed to the mobile station apparatus itself during a predetermined period in the second common search space of the downlink carrier component to which the random access resource in which the random access processing has been started corresponds after transmitting the message 3 in the same uplink carrier component as the random access resource in which the random access processing has been started, and when the mobile station apparatus detects the physical downlink control channel addressed to its own apparatus , it recognizes to have succeeded in the random access.

As described above, since the mobile station apparatus monitors the physical downlink control channel addressed to its own apparatus during the predetermined period in the second common search space of the downlink carrier component to which the random access resource in which the random access processing has been started corresponds after transmitting the message 3, a degree of freedom of arrangement of the physical downlink control channel increases in the base station apparatus.

(E) In addition, a radio communication method according to the embodiment is the radio communication method for a mobile station apparatus applied to a communication system in which a base station apparatus allocates a plurality of downlink carrier components including a common search space to be monitored in common together with any other mobile station apparatus to any mobile station apparatus, and the radio communication method is **characterized in that** when random access to the base station apparatus is performed, a monitored object of a physical downlink control channel of the common search space is extended from a first common search space of the downlink carrier component instructed to be monitored from the base station apparatus to a second common search space of any downlink carrier component other than the downlink carrier component including the first common search space.

As described above, since the monitored object of the physical downlink control channel of the common search space is extended from the first common search space of the downlink carrier component instructed to be monitored from the base station apparatus to the second common search space of any downlink carrier component other than the downlink carrier component including the first common search space, the mobile station apparatus can start random access processing in all the uplink carrier components set by the base station apparatus, and the uplink carrier components in which the mobile station apparatus starts the random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink carrier component.

(F) In addition, a radio communication method according to the embodiment is the radio communication method which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, and the radio communication method is characterized by at least comprising the steps of: monitoring the physical downlink control channel in a first common search space that is set by the base station apparatus and that is a specific common search space in the common search spaces of the plurality of downlink carrier components being in radio communication; starting random access processing in any one of random access resources corresponding to the respective downlink carrier components; and monitoring the physical downlink control channel regarding random access in a second common search space included in the downlink carrier component to which the random access resource in which the random access processing has been started corresponds.

As described above, since the mobile station apparatus starts random access processing in any one of random access resources corresponding to the respective downlink carrier components, and monitors the physical downlink control channel regarding random access in the second common search space included in the downlink carrier component to which the random access resource in which the random access processing has been started corresponds, it can start random access processing in all the uplink carrier components set by the base station apparatus.

(G) In addition, a radio communication method according to the embodiment is the radio communication method which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, and the radio communication method is characterized by at least comprising the steps of: monitoring the physical downlink control channel in a first common search space that is set by the base station apparatus and that is a specific common search space in the common search spaces of the plurality of downlink carrier components being in radio communication; starting random access processing in a random access resource notified from the base station apparatus among the random access resources corresponding to the respective downlink carrier components; and monitoring the physical downlink control channel regarding random access in a second common search space included in the downlink carrier component to which the random access resource in which the random access processing has been started corresponds.

As described above, since the mobile station apparatus starts random access processing in the random access resource notified from the base station apparatus among the random access resources corresponding to the respective downlink carrier components, and monitors the physical downlink control channel regarding random access in the second common search space included in the downlink carrier component to which the random access resource in which the random access processing has been started corresponds, the base station apparatus can select the uplink carrier component to be instructed to start random access processing from all the uplink carrier components allocated to the mobile station apparatus by the base station apparatus.

(H) In addition, a control program for a mobile station apparatus according to the embodiment is the control program for the mobile station apparatus applied to a communication system in which a base station apparatus allocates a plurality of downlink carrier components including a common search space to be monitored in common together with any other mobile station apparatus to any mobile station apparatus, and the control program is **characterized in that** in performing random access to said base station apparatus, the control program converts a series of processing into commands so as to enable a computer to read and execute them, the series of processing including processing of extending a monitored object of a physical downlink control channel of the common search space from a first common search space of the downlink carrier component instructed to be monitored from the base station apparatus to a second common search space of any downlink carrier component other than the downlink carrier component including the first common search space.

As described above, since the monitored object of the physical downlink control channel of the common search space is extended from the first common search space of the downlink carrier component instructed to be monitored from the base station apparatus to a second common search space of any downlink carrier component other than the downlink carrier component including the first common search space, the mobile station apparatus can start random access processing in all the uplink carrier components set by the base station apparatus, and the uplink carrier components in which the mobile station apparatus starts the random access processing are distributed, so that the plurality of mobile station apparatuses selects a radio resource of the same signature number and physical random access channel, a probability of causing collision of the physical random access channels is also distributed, and thus collision of the physical random access channels can be avoided from frequently occurring in the specific uplink carrier component.

(I) In addition, a control program for a mobile station apparatus according to the embodiment is the control program for the mobile station apparatus which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, and the control program is **characterized in that** the control program converts a series of processing into commands so as to enable a computer to read and execute them, the series of processing including the processing of: monitoring the physical downlink control channel in a first common search space that is set by the base station apparatus and that is a specific common search space in the common search spaces of the plurality of downlink carrier components being in radio communication; starting random access processing in any one of random access resources corresponding to the respective downlink carrier components; and monitoring the physical downlink control channel regarding random access in a second common search space included in the downlink carrier component to which the random access resource in which the random access processing has been started corresponds.

As described above, since the mobile station apparatus starts random access processing in any one of random access resources corresponding to the respective downlink carrier components, and monitors the physical downlink control channel regarding random access in a second common search space included in the downlink carrier component to which the random access resource in which the random access processing has been started corresponds, it can start random access processing in all the uplink carrier components set by the base station apparatus.

(J) In addition, a control program for a mobile station apparatus according to the embodiment is the control program for the mobile station apparatus which performs radio communication with a base station apparatus using a plurality of carrier components, and in which a common search space to be monitored in common together with the other mobile station apparatus is arranged in each of a plurality of downlink carrier components, and which monitors a physical downlink control channel in the common search space, and the control program is **characterized in that** the control program converts a series of processing into commands so as to enable a computer to read and execute them, the series of processing including the processing of: monitoring the physical downlink control channel in a first common search space that is set by the base station apparatus and that is a specific common search space of the common search spaces of the plurality of downlink carrier components being in radio communication; starting random access processing in a random access resource notified from the base station apparatus among the random access resources corresponding to the respective downlink carrier components; and monitoring the physical downlink control channel regarding random access in a second common search space included in the downlink carrier component to which the random access resource in which the random access processing has been started corresponds.

As described above, since the mobile station apparatus starts random access processing in the random access resource notified from the base station apparatus among the random access resources corresponding to the respective downlink carrier components, and monitors the physical downlink control channel regarding random access in the second common search space included in the downlink carrier component to which the random access resource in which the random access processing has been started corresponds, the base station apparatus can select the uplink carrier component to be instructed to start random access processing from all the uplink carrier components allocated to the mobile station apparatus by the base station apparatus.

Note that some of the mobile station apparatus 1 and the base station apparatus 3 in the above-mentioned embodiment may be achieved with a computer. In that case, the computer may be achieved by recording a program for achieving the above-described control function in a computer-readable recording medium, and making the program recorded in this recording medium read in a computer system to be executed. Note that the "computer system" referred to herein is defined to be the computer system incorporated in the mobile station apparatus 1 or the base station apparatus 3, and to include hardware, such as an OS and a peripheral device. In addition, the "computer-readable recording medium" means a portable medium, such as a flexible disk, a magnetic optical disk, a ROM, and a CD-ROM, and a memory storage incorporated in the computer system, such as a hard disk. Further, the "computer-readable recording medium" may also include a medium that dynamically holds a program for a short time as a communication wire used when the program is transmitted through a communication line, such as a network like the Internet, and a telephone line, and a medium that holds a program for a certain time as a volatile memory inside the computer system serving as a server or a client when the program is dynamically held for the short time. In addition, the above-described program may be the program for achieving a part of the above-mentioned functions, and it may be the program in which the above-mentioned functions can be achieved in combination with the program having been already recorded in the computer system.

In addition, some or all of the mobile station apparatus 1 and the base station apparatus 3 in the above-mentioned embodiment may be achieved as an LSI, which typically is an integrated circuit. Each functional block of the mobile station apparatus 1 and the base station apparatus 3 may be individually implemented on chips, or some or all of them may be integrated to be implemented on chips. In addition, a technique for making the functional blocks into an integrated circuit may be achieved not only as the LSI but as a dedicated circuit or a general-purpose processor. In addition, when a technology for making the functional blocks into the integrated circuit as an alternative to the LSI appears due to progress of a semiconductor technology, it is also possible to use an integrated circuit made by the technology.

As described above, although one embodiment of the present invention has been described in detail with reference to the drawings, a specific configuration is not limited to the above, and various changes of a design etc. can be made without departing from the scope of the present invention.

### [Reference Signs List]]

- 1 (1A to 1C): MOBILE STATION APPARATUS
- 3: BASE STATION APPARATUS
- 101: HIGHER LAYER PROCESSING UNIT
- 103: PREAMBLE DETECTION UNIT
- 105: SYNCHRONIZATION TIMING MEASUREMENT UNIT
- 107: CONTROL UNIT
- 109: RECEPTION PROCESSING UNIT
- 111: TRANSMISSION PROCESSING UNIT
- 201: HIGHER LAYER PROCESSING UNIT
- 203: CONTROL UNIT
- 205: RECEPTION PROCESSING UNIT
- 207: PREAMBLE GENERATION UNIT
- 209: TRANSMISSION PROCESSING UNIT
- 1011: RADIO RESOURCE CONTROL UNIT
- 1012: RANDOM ACCESS CONTROL UNIT
- 2011: RADIO RESOURCE CONTROL UNIT
- 2012: RANDOM ACCESS PROCESSING UNIT

## Claims

1. A mobile station apparatus which performs radio communication with a base station apparatus using a plurality of component carriers, wherein
in performing random access to said base station apparatus, a monitored object of a physical downlink control channel in a common search space to be monitored together with any other mobile station apparatus is extended from a first common search space of a downlink component carrier instructed to be monitored from said base station apparatus to a second common search space of any downlink component carrier in which random access processing is performed other than the downlink component carrier in which said first common search space is configured.

2. A mobile station apparatus which performs radio communication with a base station apparatus using a plurality of component carriers, comprising:
a radio resource control unit that controls to monitor a physical downlink control channel in a first common search space configured in each of one or more specific first downlink component carriers; and
a random access processing unit that, when random access processing was started using a random access resource corresponding to a second downlink component carrier other than said first downlink component carrier, controls to monitor a physical downlink control channel regarding random access in a second common search space configured in the second downlink component carrier in which the random access processing has been started using said corresponding random access resource.

3. The mobile station apparatus according to claim 1 or 2 wherein the mobile station apparatus controls to start random access processing using a random access resource notified from said base station apparatus.

4. The mobile station apparatus according to claim 1 or 2 wherein the mobile station apparatus controls to monitor at least a physical downlink control channel broadcasted by said base station apparatus in said first common search space.

5. The mobile station apparatus according to claim 1 or 2 wherein the mobile station apparatus monitors a physical downlink control channel addressed to its own apparatus in said second common search space of the downlink component carrier to which the random access resource in which said random access processing has been started corresponds, during a predetermined period after transmitting a message 3 in the same uplink component carrier as the random access resource in which said random access processing has been started, and considers to have succeeded in the random access when detecting the physical downlink control channel addressed to its own apparatus.

6. A radio communication method which is used for a mobile station apparatus that performs radio communication with a base station apparatus using a plurality of component carriers, wherein
in performing random access to said base station apparatus, a monitored object of a physical downlink control channel in a common search space to be monitored together with any other mobile station apparatus is extended from a first common search space of a downlink component carrier instructed to be monitored from said base station apparatus to a second common search space of any downlink component carrier in which random access processing is performed other than the downlink component carrier in which said first common search space is configured.

7. A radio communication method which is used for a mobile station apparatus that performs radio communication with a base station apparatus using a plurality of component carriers, the method comprising at least the steps of:
monitoring a physical downlink control channel in a first common search space configured in each of one or more specific first downlink component carriers;
starting random access processing using a random access resource corresponding to a second downlink component carrier other than said first downlink component carrier; and
monitoring a physical downlink control channel regarding random access in a second common search space configured in a second downlink component carrier in which random access processing has been started using said corresponding random access resource.

8. A control program which is used for a mobile station apparatus that performs radio communication with a base station apparatus using a plurality of component carriers, wherein in performing random access to said base station apparatus, the control program converts a series of processing into commands so as to enable a computer to read and execute them, the series of processing including processing of extending a monitored object of a physical downlink control channel in a common search space to be monitored together with any other mobile station apparatus from a first common search space of a downlink component carrier instructed to be monitored from said base station apparatus to a second common search space of any downlink component carrier in which random access processing is performed other than the downlink component carrier in which said first common search space is configured.

9. A control program which is used for a mobile station apparatus that performs radio communication with a base station apparatus using a plurality of component carriers, wherein the control program converts a series of processing into commands so as to enable a computer to read and execute them, the series of processing including processing of:
monitoring a physical downlink control channel using a first common search space configured in each of one or more specific first downlink component carriers;
starting random access processing using a random access resource corresponding to a second downlink component carrier other than said first downlink component carrier; and
monitoring a physical downlink control channel regarding random access in a second common search space configured in the second downlink component carrier in which random access processing has been started using said corresponding random access resource.
